# EUROPEAN PATENT APPLICATION

(11) **EP 3 528 499 A1**
(43) Date of publication of application: **21.08.2019**
(21) Application number: 17860240.5
(22) Date of filing: 29.09.2017
(51) Int. Cl.: H04N 19/593, H04N 19/105, H04N 19/11, H04N 19/136, H04N 19/176, H04N 19/70

(54) **IMAGE PROCESSING DEVICE AND IMAGE PROCESSING METHOD**

(30) Priority: 14.10.2016 JP 2016202225
(71) Applicant: Sony Corporation, Tokyo 108-0075 (JP)
(72) Inventor: IKEDA Masaru, Tokyo 108-0075 (JP)
(74) Representative: D Young & Co LLP
(86) International application number: PCT/JP2017/035398
(87) International publication number: WO 2018/070267

(57) **Abstract**

The present disclosure relates to an image processing apparatus and an image processing method that are capable of reducing overhead of coding processing in extending intra prediction to improve prediction accuracy.

With the group of pixels having the same distance to the current block as a line, a selection unit selects a reference line, which is referenced during intra prediction of the current block, and an intra prediction mode from a basic intra prediction mode which is an intra prediction mode in referencing a first line closest to the current block, and an extended intra prediction mode which is an intra prediction mode in referencing the first line or subsequent lines. The extended intra prediction mode is a part of the basic intra prediction mode. The present disclosure can be applied to, for example, an image coding apparatus or the like.

## Description

### TECHNICAL FIELD

The present disclosure relates to an image processing apparatus and an image processing method and, more particularly, to an image processing apparatus and an image processing method that can reduce overhead of coding processing in extending intra prediction to improve prediction accuracy.

### BACKGROUND ART

In high efficiency video coding (HEVC), the Oth line is referenced in the intra prediction. Note that, in this specification, a line is a pixel group having the same distance from a current block which is a current processing target. Furthermore, the line number is unique to each line, and is assigned for each current block in an ascending order from 0 which is given to the line closest to the current block.

On the other hand, in Joint Video Exploration Team (JVET) that searches for the next generation video coding according to International Telecommunication Union Telecommunication Standardization Sector (ITU-T), it is proposed to extend candidates of lines (hereinafter referred to as reference lines) referred to in intra prediction to 0 to 3 lines (e.g., see Non-Patent Document 1 and Non-Patent Document 2).

In the invention described in Non-Patent Document 1, only in a case where the intra prediction mode is the intra prediction mode indicating the reference direction other than the Planar prediction mode and the DC prediction mode, the reference line candidates are extended to lines 0 to 3. In the invention described in Non-Patent Document 2, reference line candidates are extended to lines 0 to 3 in all intra prediction modes.

Furthermore, according to JVET, it has also been proposed to extend candidates of intra prediction mode from 35 intra prediction modes to 67 intra prediction modes.

As described above, in a case where the candidates of the reference line or the intra prediction mode are extended in the intra prediction, the prediction accuracy is improved.

### CITATION LIST

### PATENT DOCUMENT

Non-Patent Document 1: Yao-Jen Chang, Po-Han Lin, Chun-Lung, "Arbitrary reference tier for intra directional modes", JVET-C0043, 26 May-1 June 2016
Non-Patent Document 2: Jiahao Li, "Multiple line-based intra prediction", JVET-C 0071 26 May-1 June 2016

### SUMMARY OF THE INVENTION

### SOLUTIONS TO PROBLEMS

However, since the number of candidates of the reference line and the intra prediction mode increases, processing load of selecting the reference line and the intra prediction mode increases according to the Rate-Distortion Optimization (RDO) or the like performed in the coding processing. Therefore, the overhead of coding processing such as the load of coding processing and the time required for coding processing is increased.

The present disclosure has been made in view of such a situation, and it is intended to reduce the overhead of coding processing in extending the intra prediction to improve prediction accuracy.

### Solution to Problem

An image processing apparatus according to a first aspect of the present disclosure is an image processing apparatus, including
a selection unit that selects a reference line, which is referenced during intra prediction of a current block, and an intra prediction mode from a first intra prediction mode and a second intra prediction mode,
the first intra prediction mode being an intra prediction mode in referencing a first line closest to the current block, with a group of pixels having the same distance to the current block as a line, and the second intra prediction mode being an intra prediction mode in referencing a second line other than the first line, and
the image processing apparatus further including
a prediction unit that performs the intra prediction on the current block on the basis of the reference line and the intra prediction mode which are selected by the selection unit, in which
the second intra prediction mode is a part of the first intra prediction mode.

An image processing method according to the first aspect of the present disclosure corresponds to the image processing apparatus according to the first aspect of the present disclosure.

According to the first aspect of the present disclosure,
the reference line, which is referenced during intra prediction of the current block, and the intra prediction mode are selected from the first intra prediction mode and the second intra prediction mode,
the first intra prediction mode being an intra prediction mode in referencing a first line closest to the current block, with the group of pixels having the same distance to the current block as a line, and the second intra prediction mode being an intra prediction mode in referencing a second line other than the first line, and
the intra prediction is performed on the current block on the basis of the selected reference line and the intra prediction mode. Note that the second intra prediction mode is a part of the first intra prediction mode.

An image processing apparatus according to a second aspect of the present disclosure includes a prediction unit that performs intra prediction on a current block on the basis of extension information indicating whether the extension of the intra prediction is an extension in a reference direction indicated by an intra prediction mode, or an extension of a reference line which is referenced in the intra prediction of a current block, with a group of pixels having the same distance to the current block as a line.

An image processing method according to the second aspect of the present disclosure corresponds to the image processing apparatus according to the second aspect of the present disclosure.

According to the second aspect of the present disclosure, intra prediction is performed on a current block on the basis of extension information indicating whether the extension of the intra prediction is an extension in a reference direction indicated by an intra prediction mode, or an extension of a reference line that is referenced in the intra prediction of a current block, with a group of pixels having the same distance to the current block as a line.

Note that the image processing apparatuses of the first and second aspects can be implemented by causing a computer to execute a program.

Furthermore, to implement the image processing apparatus of the first and second aspects, the program to be executed by the computer may be provided by transmitting the program via a transmission medium or by recording the program on a recording medium.

### EFFECTS OF THE INVENTION

According to the first and second aspects of the present disclosure, the overhead of the coding processing can be reduced in extending the intra prediction to improve the prediction accuracy.

Note that the effects described herein are not limiting, and any one effect disclosed in the present disclosure may be obtained.

### BRIEF DESCRIPTION OF DRAWINGS

Fig. 1 is a diagram illustrating a method of forming a CU.
Fig. 2 is a block diagram illustrating a configuration example of a first embodiment of an image coding apparatus as an image processing apparatus to which the present disclosure is applied.
Fig. 3 is a diagram for explaining a line serving as a reference line candidate.
Fig. 4 is a diagram illustrating an example of a basic intra prediction mode.
Fig. 5 is a diagram illustrating a first example of an extended intra prediction mode.
Fig. 6 is a diagram illustrating a second example of the extended intra prediction mode.
Fig. 7 is a diagram illustrating an example of a bit string after coding a syntax value of a line number.
Fig. 8 is a flowchart for explaining image coding processing.
Fig. 9 is a block diagram illustrating a configuration example of a first embodiment of an image decoding apparatus as an image processing apparatus to which the present technology is applied.
Fig. 10 is a flowchart for explaining image decoding processing.
Fig. 11 is a diagram illustrating example relationships between an extension flag and candidates of an angular intra prediction mode and a reference line.
Fig. 12 is a diagram illustrating 35 intra prediction modes in the HEVC.
Fig. 13 is a block diagram illustrating a configuration example of a computer.
Fig. 14 is a block diagram schematically illustrating a configuration example of a television device.
Fig. 15 is a block diagram schematically illustrating a configuration example of a mobile phone.
Fig. 16 is a block diagram schematically illustrating a configuration example of a recording/reproducing device.
Fig. 17 is a block diagram schematically illustrating a configuration example of an imaging device.
Fig. 18 is a block diagram schematically illustrating a configuration example of a video set.
Fig. 19 is a block diagram schematically illustrating an example configuration of a video processor.
Fig. 20 is a block diagram schematically illustrating another example configuration of a video processor.
Fig. 21 is a block diagram schematically illustrating an example configuration of a network system.

### MODE FOR CARRYING OUT THE INVENTION

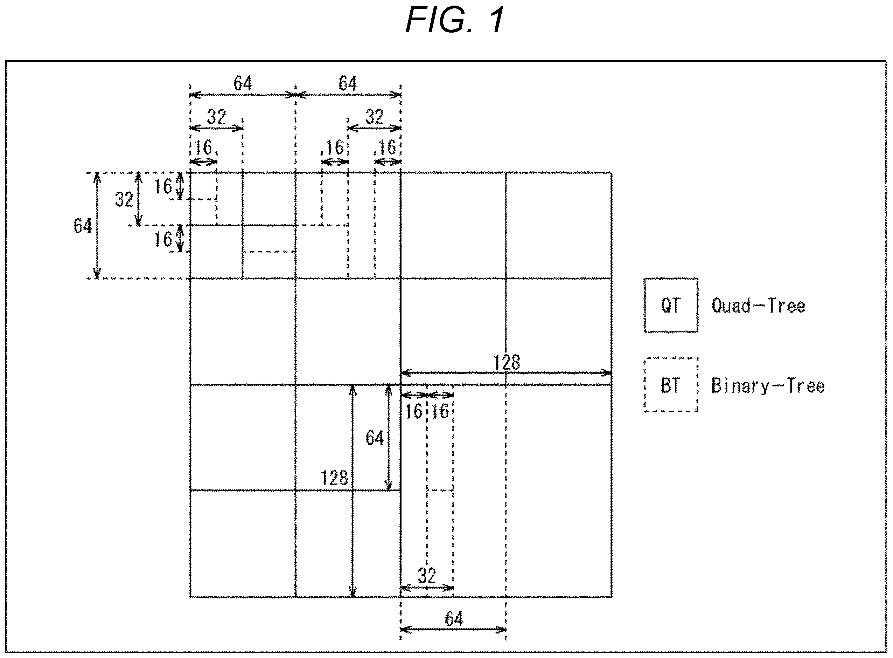

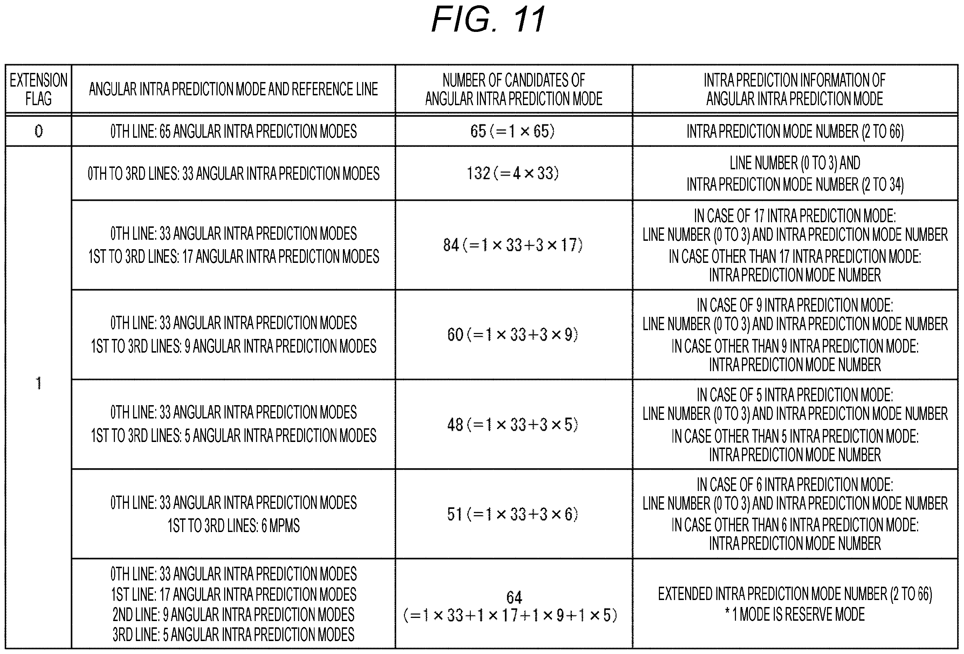

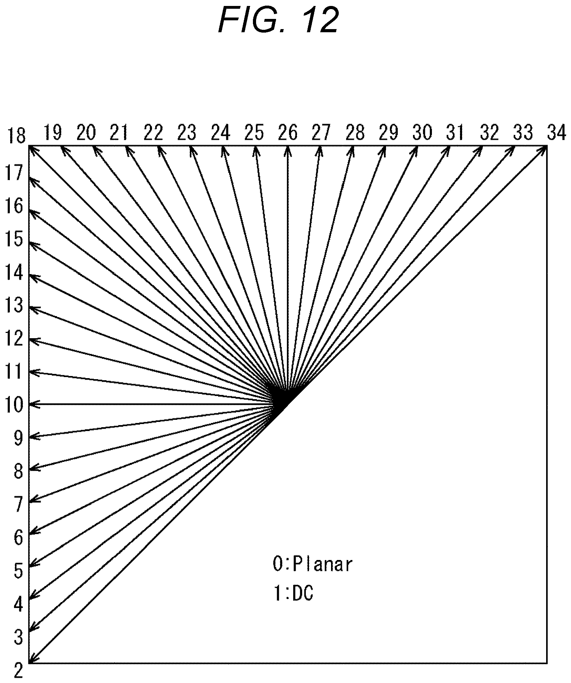

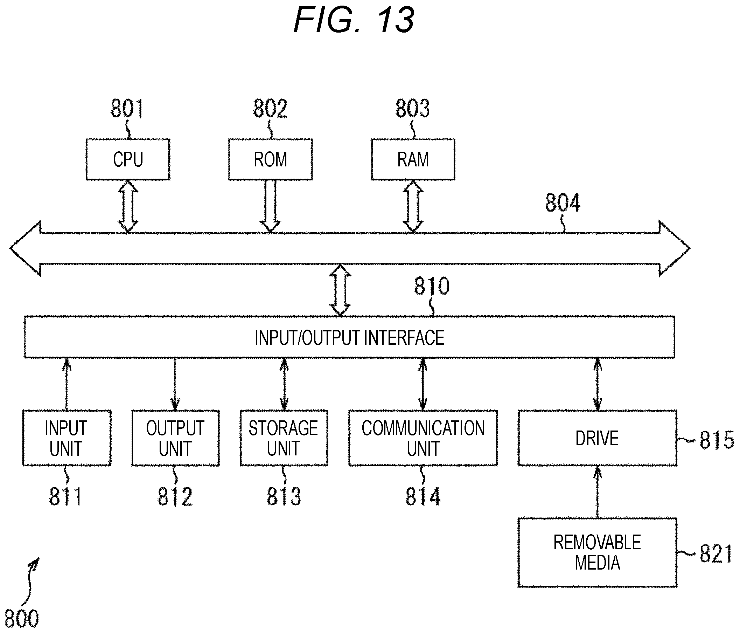

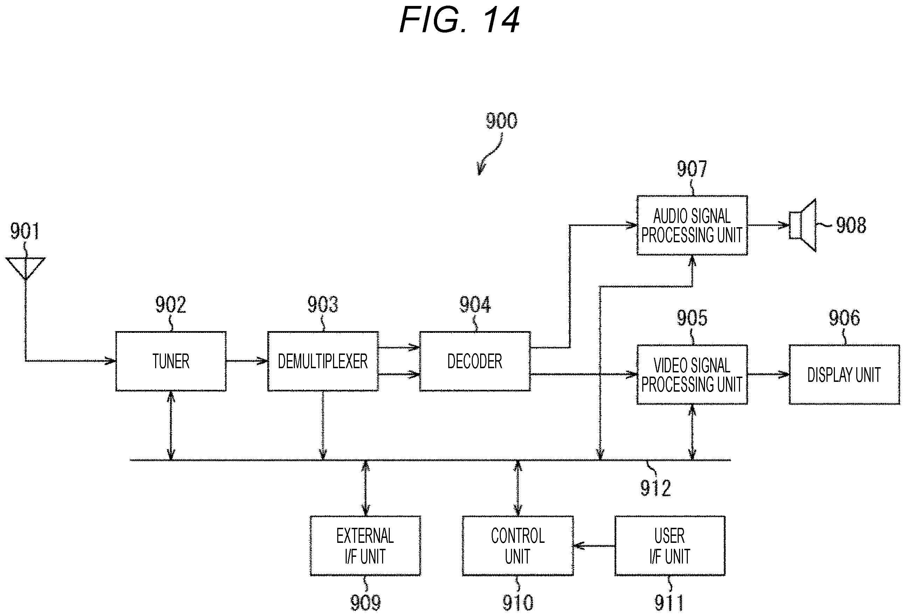

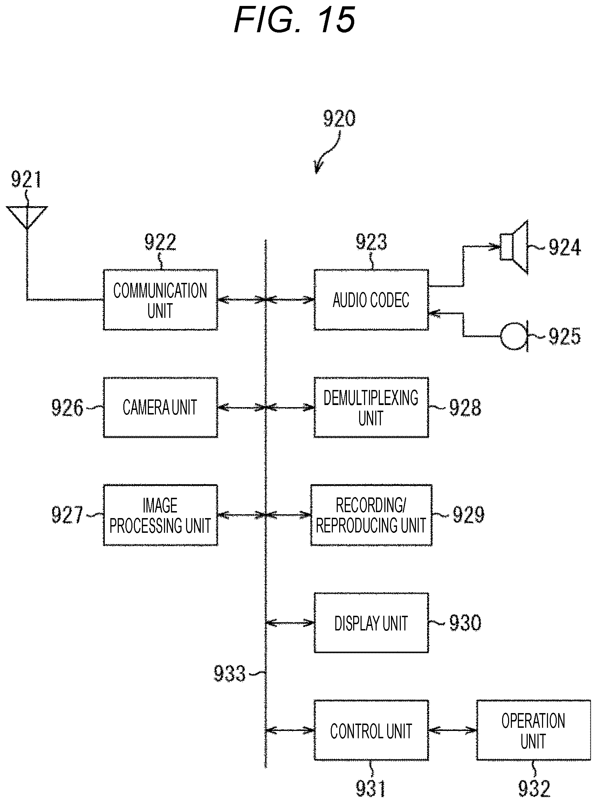

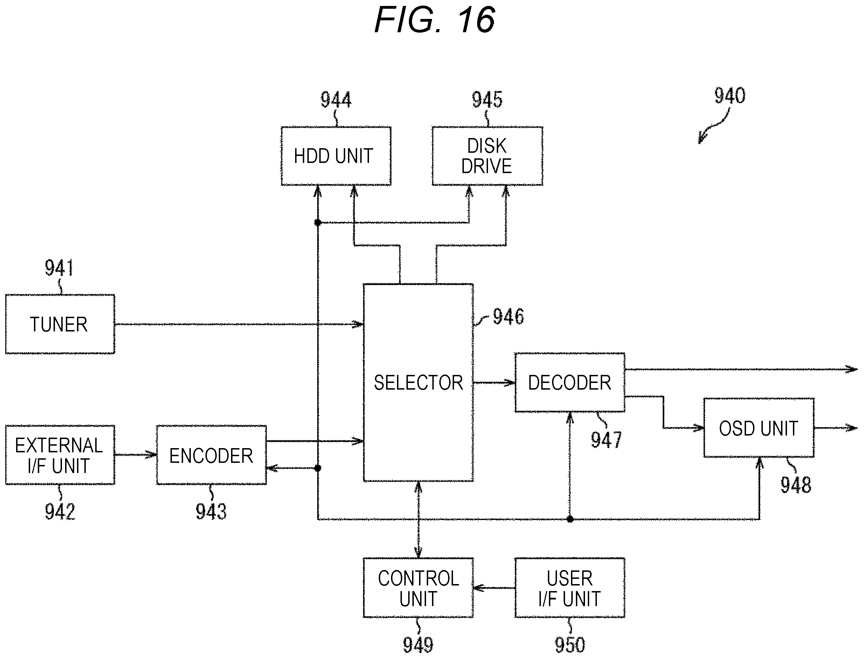

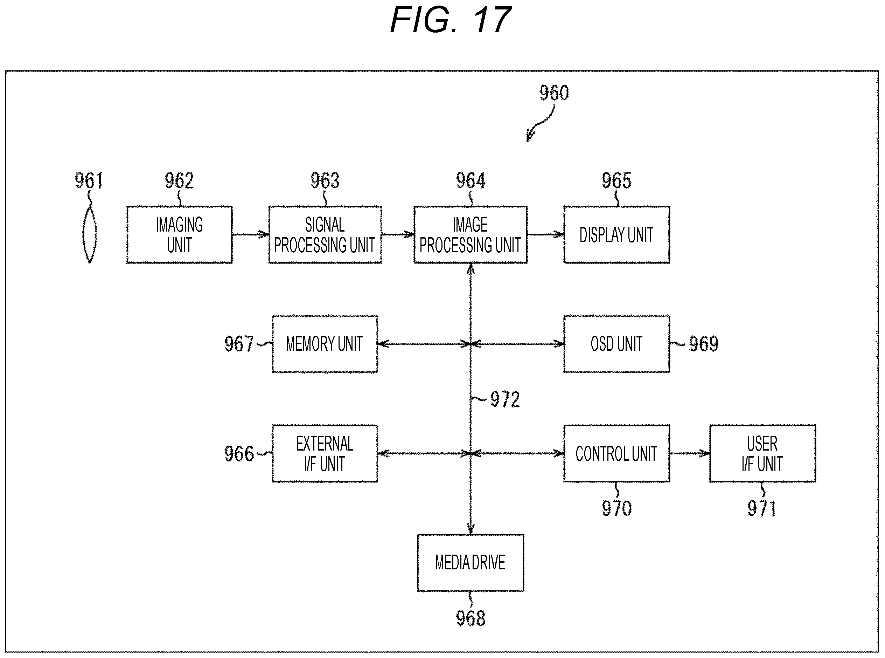

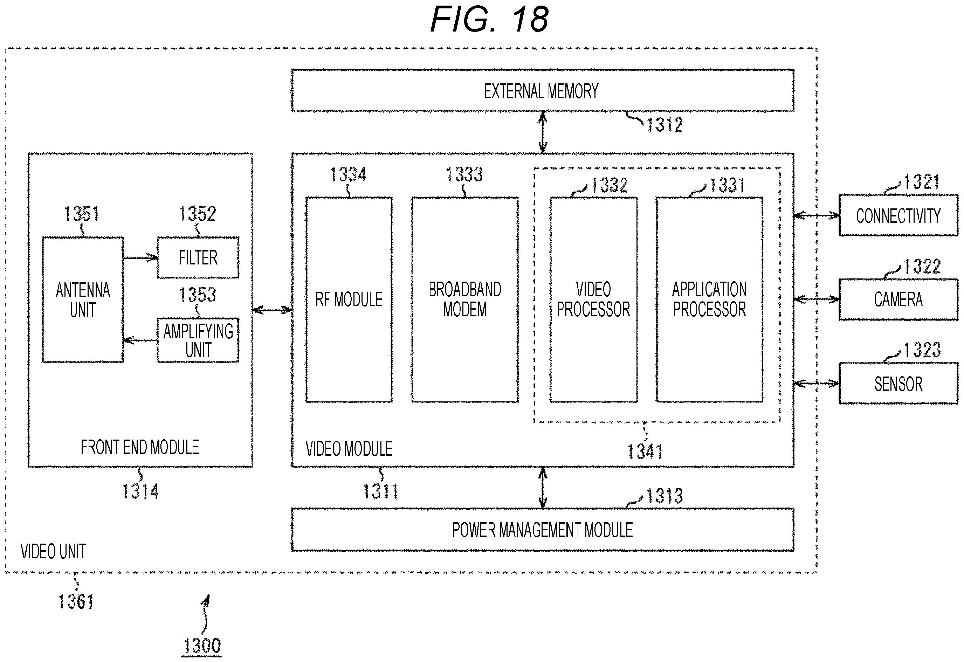

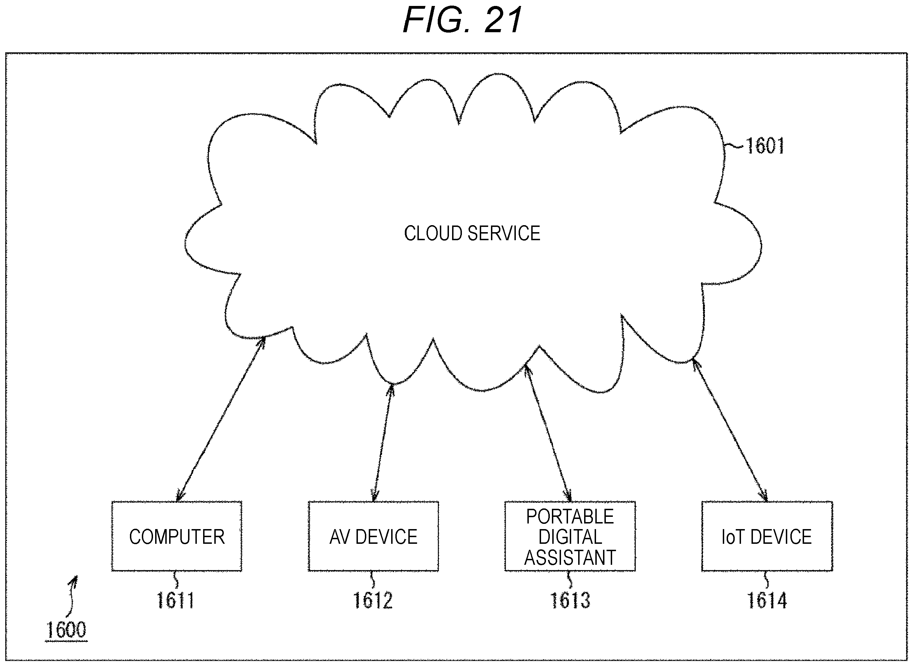

Modes for carrying out the present disclosure (hereinafter referred to as embodiments) will be described below. Note that the description is given in the following order:
1. First Embodiment: Image Coding Apparatus and Image Decoding Apparatus (Figs. 1 to 10)
2. Second Embodiment: Image Coding Apparatus and Image Decoding Apparatus (Figs. 11 and 12)
3. Third Embodiment: Computer (Fig. 13)
4. Fourth Embodiment: Television Device (Fig. 14)
5. Fifth Embodiment: Mobile phone (Fig. 15)
6. Sixth Embodiment: Recording/Reproducing Device (Fig. 16)
7. Seventh Embodiment: Imaging Device (Fig. 17)
8. Eighth Embodiment: Video Set (Figs. 18 to 20)
9. Ninth Embodiment: Network System (Fig. 21)

### <First Embodiment>

### (Description of Method of Forming CU)

In a conventional image coding method such as Moving Picture Experts Group 2 (MPEG2) (ISO/IEC 13818-2)) and MPEG-4 Part 10 (Advanced Video Coding which is hereinafter referred to as AVC), the coding processing is executed for a processing unit called macroblock. A macroblock is a block having a uniform size of 16 × 16 pixels. On the other hand, in the HEVC, the coding processing is executed for a processing unit (coding unit) called Coding Unit (CU). The CU is a block having a variable size formed by recursively dividing a Largest Coding Unit (LCU) which is the largest coding unit. The maximum size of the selectable CU is 64 × 64 pixels. The minimum size of the selectable CU is 8 × 8 pixels. The minimum size CU is called a Smallest Coding Unit (SCU). Note that the maximum size of CU is not limited to 64 × 64 pixels, and may be a larger block size, such as 128 × 128 pixels or 256 × 256 pixels.

In this manner, as a result of adopting a CU having a variable size, the HEVC can adaptively adjust the image quality and coding efficiency according to the content of the image. Prediction processing for predictive coding is executed in a processing unit called a Prediction Unit (PU). The PU is formed by dividing the CU by one of several division patterns. Furthermore, the PU is formed by processing units called a Prediction Block (PB) for each luminance (Y) and color difference (Cb, Cr). Furthermore, orthogonal transformation processing is executed in a processing unit called a Transform Unit (TU). TU is formed by dividing CU or PU to a certain depth. Furthermore, TU is formed by processing units (conversion blocks) called Transform Blocks (TB) for each luminance (Y) and color difference (Cb, Cr).

In the following, explanation may be given by using "blocks" as partial areas or processing units of an image (picture) (not a block of the processing unit). "Blocks" in this case indicate arbitrary partial areas in the picture, and size, shape, characteristics, and the like of the blocks are not limited. That is, the "blocks" in this case include, for example, arbitrary partial areas (processing units) such as TB, TU, PB, PU, SCU, CU, LCU (CTB), a sub-block, a macroblock, a tile, or a slice.

Fig. 1 is a diagram for explaining a method of forming a CU.

The CU in the first embodiment is formed by a technique called Quad tree plus binary tree (QTBT) described in JVET-C0024, "EE 2.1: Quadtree plus binary tree structure integration with JEM tools".

Specifically, in the HEVC, a CU is formed by dividing one block into 4 (= 2 × 2) pieces. In the first embodiment, however, one block is divided into 4 (= 2 × 2) or 2 (= 1 × 2, 2 × 1) pieces to form a CU. That is, in the first embodiment, the formation of the CU is performed by recursively repeating the division of one block into four or two subblocks, resulting in forming a Quad-Tree shape, or a binary tree (Binary-Tree) tree structure. Note that in the first embodiment, PU and TU are the same as CU.

### (Configuration Example of Image Coding Apparatus)

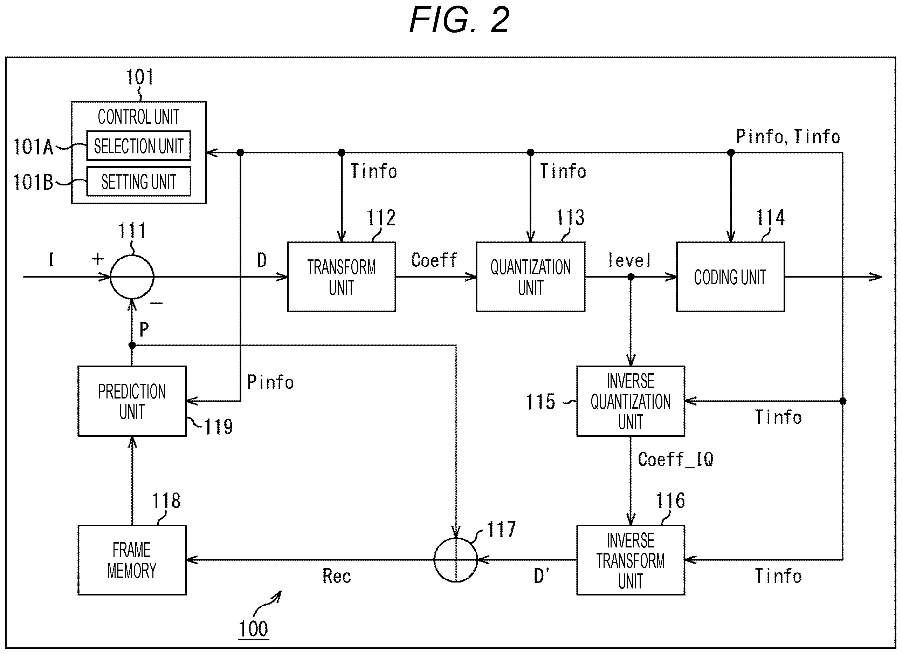

Fig. 2 is a block diagram illustrating a configuration example of a first embodiment of an image coding apparatus as an image processing apparatus to which the present disclosure is applied. An image coding apparatus 100 in Fig. 2 is an apparatus that encodes prediction residual between an image and a predicted image of the image, such as AVC and HEVC. For example, the image coding apparatus 100 includes the HEVC technology and technology proposed according to the JVET.

Note that Fig. 2 only illustrates main constituent components, such as processing units and data flow, and the processing items are not limited to those illustrated in Fig. 2. That is, the image coding apparatus 100 may include other processing units not illustrated as blocks in Fig. 2, or a processing flow or a data flow not illustrated by arrows or the like in Fig. 2 may exist.

The image coding apparatus 100 of Fig. 2 includes a control unit 101, a calculation unit 111, a transform unit 112, a quantization unit 113, a coding unit 114, an inverse quantization unit 115, an inverse transform unit 116, a calculation unit 117, a frame memory 118, and a prediction unit 119. The image coding apparatus 100 performs coding for each CU with respect to a picture that is a moving image of an input frame unit.

Specifically, the control unit 101 of the image coding apparatus 100 is formed by a selection unit 101A and a setting unit 101B. The selection unit 101A of the control unit 101 selects a part of coding parameters (e.g., header information Hinfo, prediction information Pinfo, transform information Tinfo, and the like) according to the RDO or the like. The setting unit 101B sets a part of coding parameters selected by the selection unit 101A and sets the other part of the coding parameter on the basis of external input or the like.

Specifically, the header information Hinfo includes information of, for example, a Video Parameter Set (VPS), a Sequence Parameter Set (SPS), a Picture Parameter Set (PPS), a slice header (SH), or the like. For example, the header information Hinfo includes information that defines, for example, the image size (width PicWidth, height PicHeight), bit depth (luminance bitDepthY, color difference bitDepthC), and maximum value MaxCUSize/minimum value MinCUSize of CU size. Of course, the header information Hinfo may include any contents, and any information other than the above examples may be included in the header information Hinfo. The setting unit 101B sets header information on the basis of external input or the like.

Furthermore, the prediction information Pinfo includes, for example, prediction mode information indicating whether the prediction mode of PU (CU) is intra prediction mode or inter prediction mode, the size of PB, and the like. Furthermore, if the prediction mode of the PU is intra prediction mode, the prediction information Pinfo includes an intra prediction mode number as the intra prediction mode information indicating the intra prediction mode of the PU, a line number as the reference line information indicating the reference line of the PU, and the like. The intra prediction mode number is a number unique to the intra prediction mode.

On the other hand, if the prediction mode of the PU is the inter prediction mode, the prediction information Pinfo includes a motion vector and the like. Of course, the prediction information Pinfo may include any contents, and any information other than the above example may be included in the prediction information Pinfo.

The selection unit 101A selects the mode information and the size of PB according to the RDO, and the setting unit 101B sets the selected mode information and the size of PB. Furthermore, in a case where the information indicating the intra prediction mode is selected as the mode information, the selection unit 101A selects, according to the RDO, the reference line and the intra prediction mode from a basic intra prediction mode of the line having the line number 0 and an extended intra prediction mode of the line having the line number 1 or subsequent to 1.

The basic intra prediction mode (first intra prediction mode) is an intra prediction mode when the Oth line is set as a reference line in the first embodiment. The extended intra prediction mode (second intra prediction mode) is an intra prediction mode when the lines subsequent to line 1 are set as reference lines in the first embodiment, and is provided as part of the basic intra prediction mode.

The setting unit 101B sets the intra prediction mode number of the selected intra prediction mode. Further, in a case where the selected intra prediction mode is the intra prediction mode common to both the basic intra prediction mode and the extended intra prediction mode, the setting unit 101B sets the line number of the selected reference line.

On the other hand, in a case where the information indicating the inter prediction mode is selected as the mode information, the selection unit 101A selects the motion vector according to the RDO. The setting unit 101B sets the selected motion vector.

The transform information Tinfo includes TB size TBSize that are information indicating the size of TB and the like. Of course, the transform information Tinfo includes any contents, and any information other than the above example may be included in the transform information Tinfo. The selection unit 101A selects the TB size TBSize or the like according to the RDO, and the setting unit 101B sets the selected TB size TBSize and the like.

On the basis of the set coding parameters, the selection unit 101A divides the picture input to the image coding apparatus 100 into CU (PU, TU), and sequentially sets the divided CU (PU, TU) to a CU (PU, TU) to be coded. The selection unit 101A supplies the image I of the CU (PU, TU) to be coded to the calculation unit 111.

Furthermore, the setting unit 101B supplies the set coding parameters to each block. For example, the setting unit 101B supplies the header information Hinfo to each block. Furthermore, the setting unit 101B supplies the prediction information Pinfo to the prediction unit 119 and the coding unit 114, and the transform information Tinfo into the transform unit 112, the quantization unit 113, the coding unit 114, the inverse quantization unit 115, and the inverse transform unit 116.

The calculation unit 111 subtracts, from the image I, the predicted image P of the PU corresponding to the image I supplied from the prediction unit 119 to obtain a prediction residual D and supplies the prediction residual D to the transform unit 112.

The transform unit 112 performs, for example, orthogonal transformation on the prediction residual D supplied from the calculation unit 111, on the basis of the transform information Tinfo supplied from the setting unit 101B, and derives a transform coefficient Coeff. The transform unit 112 supplies the transform coefficient Coeff to the quantization unit 113.

The quantization unit 113 scales (quantizes) the transform coefficient Coeff supplied from the transform unit 112, on the basis of the transform information Tinfo supplied from the setting unit 101B, and derives a quantized transform coefficient level, level. The quantization unit 113 supplies the quantized transform coefficient level, level, to the coding unit 114 and the inverse quantization unit 115.

The coding unit 114 encodes the quantized transform coefficient level, level, supplied from the quantization unit 113 and the coding parameter supplied from the setting unit 101B by a predetermined method. For example, the coding unit 114 converts the coding parameter and the quantized transform coefficient level, level, into the syntax value of each syntax element according to the definition of a syntax table. Then, the coding unit 114 encodes each syntax value (e.g., arithmetic coding such as Context-based Adaptive Binary Arithmetic Coding (CABAC), unary coding, etc.).

The coding unit 114 multiplexes, for example, coded data which is a bit string of each syntax value obtained as a result of coding, and outputs the multiplexed data as a coded stream.

On the basis of the transform information Tinfo supplied from the setting unit 101B, the inverse quantization unit 115 scales (inversely quantizes) the value of the quantized transform coefficient level, level, supplied from the quantization unit 113, and derives the transform coefficient Coeff_IQ after inverse quantization. The inverse quantization unit 115 supplies the transform coefficient Coeff_IQ to the inverse transform unit 116. The inverse quantization performed by the inverse quantization unit 115 is an inverse processing of quantization performed by the quantization unit 113.

On the basis of the transform information Tinfo supplied from the setting unit 101B, the inverse transform unit 116 performs inverse orthogonal transformation and the like on the transform coefficient Coeff_IQ supplied from the inverse quantization unit 115 and derives a prediction residual D'. The inverse transform unit 116 supplies the prediction residual D' to the calculation unit 117. The inverse orthogonal transform performed by the inverse transform unit 116 is the inverse processing of the orthogonal transform performed by the transform unit 112.

The calculation unit 117 adds the prediction residual D' supplied from the inverse transform unit 116 and a predicted image P of the PU corresponding to the prediction residual D' supplied from the prediction unit 119 to generate a locally decoded image Rec. The calculation unit 117 supplies the locally decoded image Rec to the frame memory 118.

The frame memory 118 reconstructs a decoded image for each picture unit using the locally decoded image Rec supplied from the calculation unit 117, and stores the decoded image in a buffer in the frame memory 118. The frame memory 118 reads the decoded image designated by the prediction unit 119 as a reference image from the buffer and supplies the read decoded image to the prediction unit 119. Furthermore, the frame memory 118 may store the header information Hinfo, the prediction information Pinfo, the transform information Tinfo, and the like related to the generation of the decoded image in the buffer in the frame memory 118.

On the basis of the prediction information Pinfo supplied from the setting unit 101B, the prediction unit 119 acquires the decoded image stored in the frame memory 118 as a reference image, and uses the reference image to perform intra prediction or inter prediction on the PU to be coded (current block). The prediction unit 119 supplies the predicted image P generated as a result of the prediction processing to the calculation units 111 and 117.

### (Explanation of Line as Candidate for Reference Line)

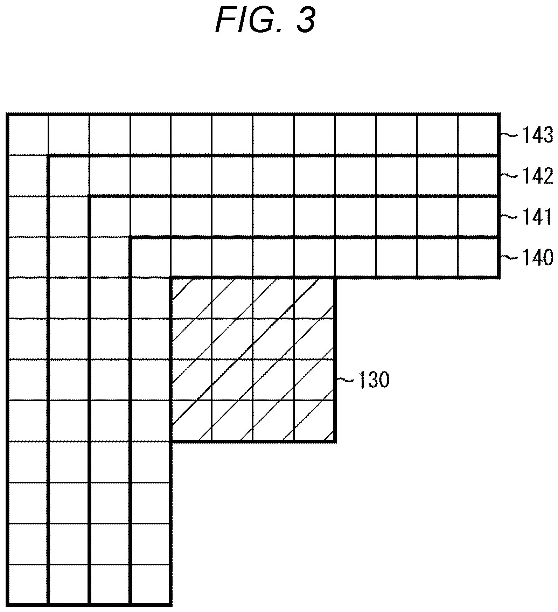

Fig. 3 is a diagram for explaining a line that may be a candidate for a reference line.

In Fig. 3, the smallest square represents a pixel. Furthermore, in the example of Fig. 3, the size of a current block 130 is 4 pixels (horizontal) × 4 pixels (vertical).

In this case, a total of 17 pixels including eight pixels above, eight pixels on the left of, and one pixel on the upper left of the current block 130, each pixel having a distance of one pixel to the current block 130, makes the Oth line 140.

Furthermore, a total of 19 pixels including eight pixels above, eight pixels on the left of, and three pixels on the upper left of the current block 130, each pixel having a distance of two pixels to the current block 130, makes the 1st line 141.

Moreover, a total of 21 pixels including eight pixels above, eight pixels on the left of, and five pixels on the upper left of the current block 130, each pixel having a distance of three pixels to the current block 130, makes the 2nd line 142.

Furthermore, a total of 23 pixels including eight pixels above, eight pixels on the left of, and seven pixels on the upper left of the current block 130, each pixel having a distance of four pixels to the current block 130, makes the 3rd line 143.

In the first embodiment, the number of candidate reference lines is four. Therefore, the lines 140 to 143 configured as described above become candidates of the reference line of the current block 130.

### (Example of Basic Intra Prediction Mode)

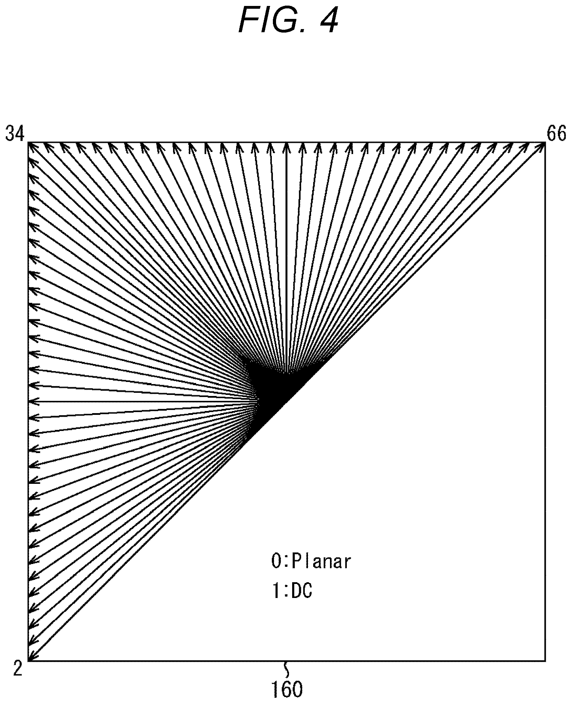

Fig. 4 is a diagram illustrating an example of the basic intra prediction mode.

The basic intra prediction mode in Fig. 4 is 67 intra prediction modes proposed by the JVET. Specifically, the basic intra prediction mode in which the intra prediction mode number is 0 is the Planar prediction mode, and the basic intra prediction mode in which the intra prediction mode number is 1 is the DC prediction mode.

Furthermore, 65 intra prediction modes with intra prediction mode numbers from 2 to 66 are intra prediction modes (hereinafter referred to as angular intra prediction modes) indicating reference directions at different angles.

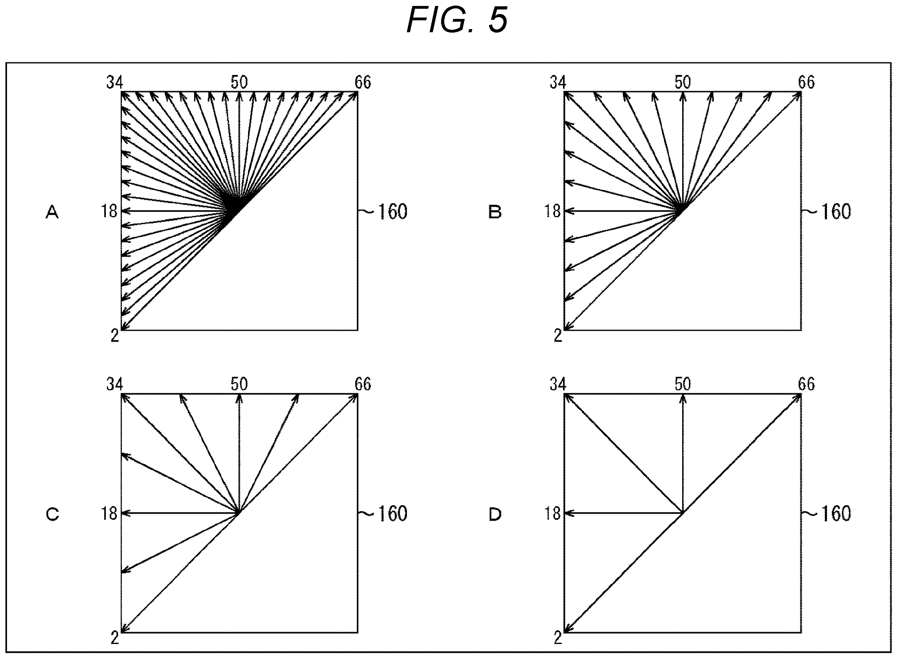

Fig. 4 illustrates reference directions indicated by individual angular intra prediction modes of the current block 160 with each arrow heading from the center of the current block 160 to the position of a virtual pixel used for prediction. Furthermore, at the tip ends of some arrows, an intra prediction mode number of the angular intra prediction mode corresponding to each arrow is indicated. This also applies to Figs. 5 and 12 described later.

### (First Example of Extended Intra Prediction Mode)

Fig. 5 illustrates a first example of the extended intra prediction mode.

As illustrated in Fig. 5, the extended intra prediction mode is a mode that selects an angular intra prediction mode of the basic intra prediction mode at every predetermined number, so as to include an intra prediction modes indicating the horizontal direction, vertical direction, and diagonal direction as reference directions.

Specifically, as illustrated in A of Fig. 5, the extended intra prediction mode may be formed by, for example, 33 intra prediction modes obtained by selecting every other mode of 65 angular intra prediction modes out of 67 basic intra prediction modes. The intra prediction mode numbers of the 33 extended intra prediction modes are 2, 4, 6, ... , 66. Furthermore, the reference direction indicated by the 33 extended intra prediction modes is the same as the reference direction indicated by the angular intra prediction mode of the HEVC.

Furthermore, as illustrated in B of Fig. 5, the extended intra prediction mode may be formed by, for example, 17 intra prediction modes obtained by selecting every three modes of 65 angular intra prediction modes out of 67 basic intra prediction modes. The intra prediction mode numbers of the 17 extended intra prediction modes are 2, 6, 10, ... , 66.

Furthermore, as illustrated in C of Fig. 5, the extended intra prediction mode may be formed by, for example, 9 intra prediction modes obtained by selecting every seven modes of 65 angular intra prediction modes out of 67 basic intra prediction modes. The intra prediction mode numbers of the 9 extended intra prediction modes are 2, 10, 18, ... , 66.

Furthermore, as illustrated in D of Fig. 5, the extended intra prediction mode may be formed by, for example, 5 intra prediction modes obtained by selecting every 15 modes of 65 angular intra prediction modes out of 67 basic intra prediction modes. The intra prediction mode numbers of the 5 extended intra prediction modes are 2, 18, 34, 50, and 66.

The extended intra prediction modes illustrated in A to D of Fig. 5 include the intra prediction mode of the intra prediction mode number 18 that indicates the horizontal direction (HOR) as a reference direction. Furthermore, the extended intra prediction modes illustrated in A to D of Fig. 5 include the intra prediction mode of the intra prediction mode number 50 that indicates the vertical direction (VER) as a reference direction. Furthermore, the extended intra prediction modes illustrated in A to D of Fig. 5 include the intra prediction modes of the intra prediction mode numbers 2, 34, and 66 that respectively indicate a bottom-left direction, a top-left direction, and a top-right direction as reference directions.

As described above, the number of extended intra prediction modes is smaller than the number of basic intra prediction modes. Therefore, the processing load of selecting the reference line and the intra prediction mode can be reduced compared to the case where the reference line and the intra prediction mode are selected from the basic intra prediction modes of all lines.

Furthermore, according to the experiments of the applicant, it has been found that there is a high possibility that, even when any line is selected as the reference line according to the RDO, the intra prediction mode selected according to the RDO indicates the horizontal direction, the vertical direction, and the diagonal direction as the reference directions. Therefore, as illustrated in A to D of Fig. 5, it is possible to improve appropriateness of the selected intra prediction mode when the extended intra prediction mode includes the intra prediction modes including the horizontal direction, the vertical direction, and the diagonal direction as the reference directions. As a result, it is possible to minimize deterioration in prediction accuracy caused by reducing the candidates of the intra prediction mode of the lines having the line number 1 or subsequent to 1 from the basic intra prediction mode to the extended intra prediction mode.

### (Second Example of Extended Intra Prediction Mode)

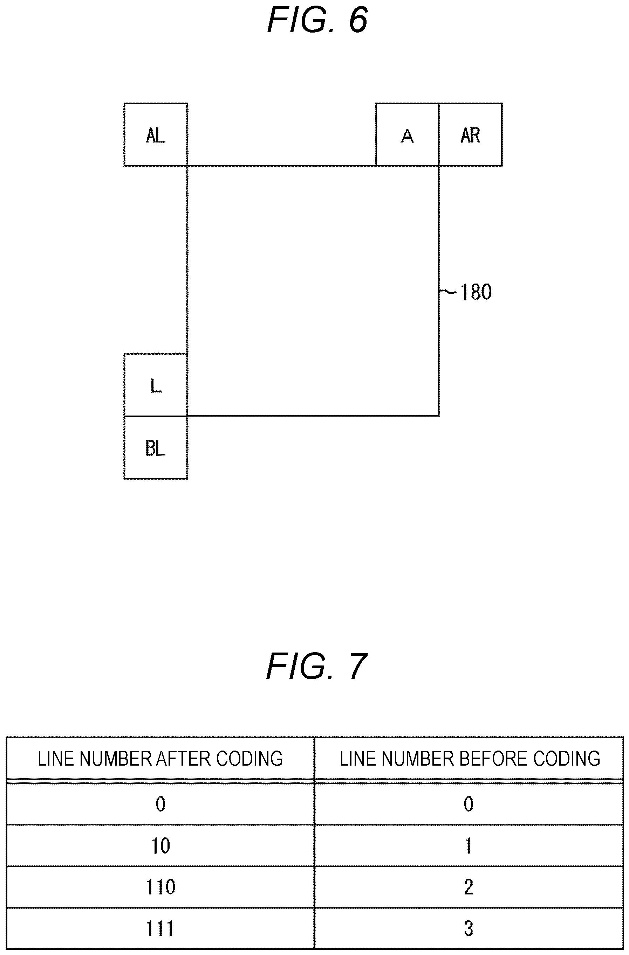

Fig. 6 is a diagram for explaining a second example of the extended intra prediction mode.

In the example of Fig. 6, the extended intra prediction mode of the current block 180 is the Most Probable Mode (MPM) of the current block 180.

The MPM of the current block 180 registers up to six modes of the intra prediction mode, the planar prediction mode, and the DC prediction mode in a not-overlapping manner according to priority in descending order, including block L which is the PU on the left of the current block 180, block A which is the PU on the top of the current block 180, block BL which is the lower left PU of the current block 180, block AR which is the upper right PU of the current block 180, and block AL which is the upper left PU of the current block 180.

The order of priority is, in descending order, the intra prediction mode of the block L, the intra prediction mode of the block A, the planar prediction mode, the DC prediction mode, the intra prediction mode of the block BL, the intra prediction mode of the block AR, and the intra prediction mode of the block AL.

In a case where the number of intra prediction modes registered in the MPM of the current block 180 as described above is less than 6, another intra prediction mode having the intra prediction mode number which is just one number greater or smaller than the angular intra prediction mode numbers already registered in the MPM is additionally registered in the MPM. In a case where the resulting number of intra prediction modes registered in the MPM of the current block 180 is less than 6, the intra prediction modes not registered in the MPM and indicating the vertical, horizontal, and diagonal directions as reference directions are additionally registered sequentially.

As described above, in the example of Fig. 6, the extended intra prediction mode of the current block 180 is the MPM of the current block 180, so that the extended intra prediction mode differs for each PU (CU).

Furthermore, there is a high possibility that the MPM of the current block 180 is selected as the intra prediction mode of the current block 180. Therefore, by setting the extended intra prediction mode of the current block 180 to the MPM of the current block 180, it is possible to minimize deterioration in prediction accuracy caused by reducing the candidates of the intra prediction mode of the lines having the line number 1 or subsequent to 1 from the basic intra prediction mode to the extended intra prediction mode.

Note that, in the first embodiment, the extended intra prediction mode only includes the angular intra prediction mode, but may also include the Planar prediction mode and the DC prediction mode.

### (Bit String After Coding Syntax Value of Line Number)

Fig. 7 illustrates an example of a bit string after coding the syntax value of the line number.

As illustrated in Fig. 7, in a case where the line number is 0 to 3, the syntax value of the line number before coding is 0 to 3. The coding unit 114 performs unary coding of the syntax value of this line number. Accordingly, the syntax values "0", "1", "2", and "3" of the line numbers before coding become bit strings "0", "10", "110", "111", respectively after coding.

As described above, the image coding apparatus 100 allocates line numbers so that a smaller line number indicates a smaller distance to the current block, and performs the unary coding of the syntax value of the line numbers. Therefore, a bit number of the bit string of the syntax value of the line number after coding becomes smaller as the line number is smaller. In other words, the bit number of the bit string becomes smaller as the distance to the current block is smaller and easily selected as the reference line. Accordingly, it is possible to reduce the data amount of the syntax value of the line number after coding.

### (Description of Processing of Image Coding Apparatus)

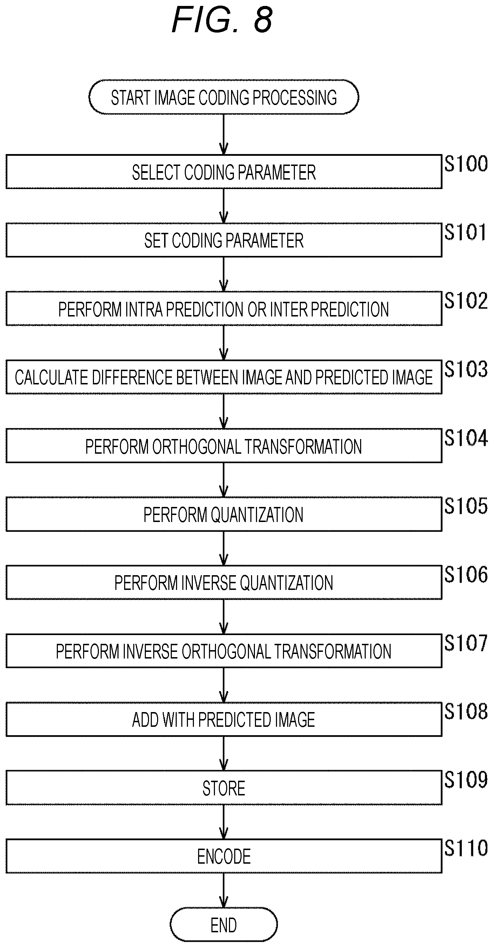

Fig. 8 is a flowchart illustrating the image coding processing of the image coding apparatus 100 of Fig. 2.

In step S100 of Fig. 8, the selection unit 101A of the control unit 101 selects a part of coding parameters (e.g., header information Hinfo, prediction information Pinfo, and transform information Tinfo) according to the RDO or the like. For example, the selection unit 101A selects the mode information according to the RDO. Furthermore, in a case where selecting information indicating the intra prediction mode as the mode information, the selection unit 101A selects, according to the RDO, the reference line and the intra prediction mode from the basic intra prediction mode of the line having the line number 0 and the extended intra prediction mode of the line having the line number 1 or subsequent to 1.

In step S101, the setting unit 101B sets a part of coding parameters selected by the processing in step S100, and sets the other part of the coding parameters on the basis of external input or the like. For example, the setting unit 101B sets the line number of the reference line and the intra prediction mode number of the intra prediction mode, which are selected by the processing of step S100, as the prediction information Pinfo.

In step S102, the prediction unit 119 acquires the decoded image stored in the frame memory 118 as a reference image on the basis of the prediction information Pinfo set in step S101, and uses the reference image to perform intra prediction or inter prediction the PU to be coded.

In step S103, the calculation unit 111 calculates the difference between the input image and the predicted image P generated as a result of the processing in step S102. That is, the calculation unit 111 generates a prediction residual D between the input image and the predicted image P. The prediction residual D obtained in this manner has a reduced data amount compared to the data amount of the original image data. Therefore, the data amount can be compressed compared to the case where the image is directly encoded.

In step S104, the transform unit 112 performs, for example, orthogonal transformation on the prediction residual D generated in the processing in step S103 on the basis of the transform information Tinfo set by the processing in step S101, and derives the transform coefficient Coeff.

In step S105, the quantization unit 113 quantizes the transform coefficient Coeff obtained by the processing of step S104 on the basis of the transform information Tinfo set by the processing of step S101, and derives the quantized transform coefficient level, level.

In step S106, the inverse quantization unit 115 performs inverse quantization of the quantized transform coefficient level, level, generated by the processing in step S105 with the quantization characteristic corresponding to the quantization characteristic in step S105, on the basis of the transform information Tinfo set by the processing of step S101. Accordingly, the inverse quantization unit 115 derives the transform coefficient Coeff_IQ.

In step S107, the inverse transform unit 116 performs, for example, inverse orthogonal transformation on the transform coefficient Coeff_IQ obtained in the processing in step S106 by a method corresponding to orthogonal transformation or the like in step S104, on the basis of the transform information Tinfo set by the processing in step S101. Accordingly, the inverse transform unit 116 derives the prediction residual D'.

In step S108, the calculation unit 117 adds the predicted image P obtained by the process in step S102 to the prediction residual D' derived by the process in step S107, thus obtaining a decoded image Rec which is locally decoded.

In step S109, the frame memory 118 reconstructs a decoded image for each picture unit using the locally decoded image Rec obtained by the process in step S108, and stores the decoded image in the buffer in the frame memory 118.

In step S110, the coding unit 114 encodes the quantized transform coefficient level, level, obtained by the processing in step S105 and the coding parameter set in step S101. For example, the coding unit 114 performs unary coding of the line number of the reference line of the coding parameters. The coding unit 114 multiplexes the coded data obtained as a result of the coding, and outputs the multiplexed data as an encoded stream to the outside of the image coding apparatus 100. This coded stream is transmitted to the decoding side via, for example, a transmission line or a recording medium.

Upon completion of the processing in step S110, the image coding processing is ended.

As described above, the image coding apparatus 100 selects the reference line and the intra prediction mode from the basic intra prediction mode of the Oth line and the extended intra prediction mode of first and subsequent lines.

Therefore, the prediction accuracy can be improved compared to the case where the only candidate of the reference line is the Oth line. Furthermore, even when any line is selected as the reference line, the load of processing of selecting the reference line and the intra prediction mode can be reduced compared to the case where the candidate of the intra prediction mode is the basic intra prediction mode. Therefore, it is possible to reduce the overhead such as the load of the coding processing and the time required for the coding processing.

Furthermore, the image coding apparatus 100 transmits the line number of the reference line only in a case where the intra prediction mode common to the basic intra prediction mode and the extended intra prediction mode is selected. In other words, the reference line is always the Oth line in a case where the intra prediction mode not common in the basic intra prediction mode and the extended intra prediction mode is selected, so that the line number is not transmitted. Therefore, unlike the technologies described in Non-Patent Documents 1 and 2, it is possible to reduce data amount of the coded stream and improve coding efficiency, compared to the case where the line number of the reference line is always transmitted irrespective of the selected intra prediction mode. Furthermore, it is possible to reduce the processing amount of the image coding apparatus 100 and also an image decoding apparatus 200 described later.

### (Configuration Example of Image Decoding Apparatus)

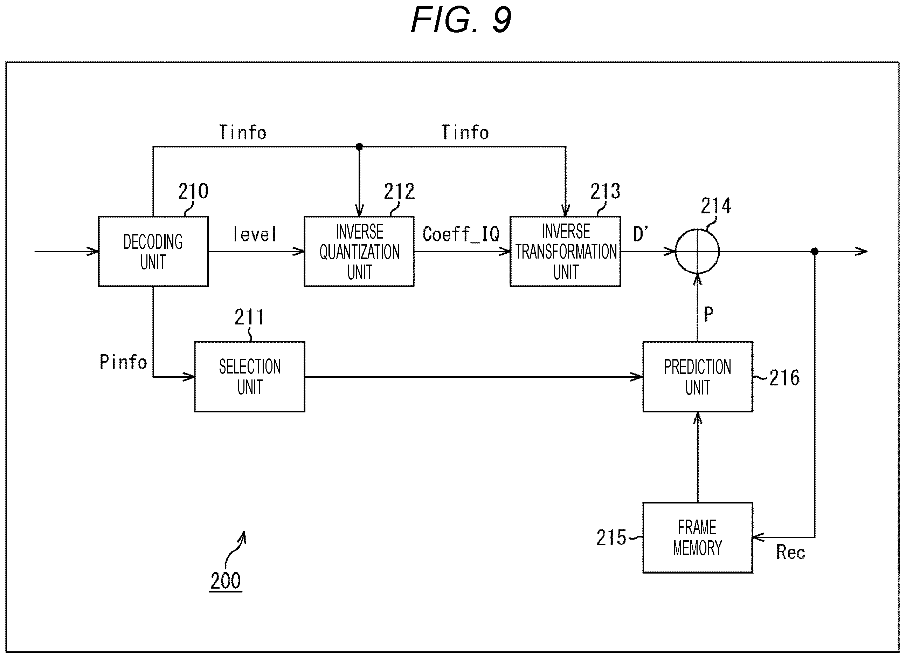

Fig. 9 is a block diagram illustrating a configuration example of a first embodiment of an image decoding apparatus as an image processing apparatus to which the present technology is applied to decode the coded stream generated by the image coding apparatus 100 in Fig. 2. The image decoding apparatus 200 in Fig. 9 decodes the coded stream generated by the image coding apparatus 100 by a decoding method corresponding to the coding method in the image coding apparatus 100. For example, the technology proposed by the HEVC or the technology proposed by the JVET is implemented in the image decoding apparatus 200.

Note that in Fig. 9, main processing items such as the processing unit and the flow of data are illustrated, and the ones illustrated in Fig. 9 are not limited to everything. That is, the image decoding apparatus 200 may include other processing units not illustrated as blocks in Fig. 9, or a processing flow or a data flow not illustrated by arrows or the like in Fig. 9 may exist.

The image decoding apparatus 200 in Fig. 9 includes a decoding unit 210, a selection unit 211, an inverse quantization unit 212, an inverse transform unit 213, a calculation unit 214, a frame memory 215, and a prediction unit 216. The image decoding apparatus 200 decodes the coded stream generated by the image coding apparatus 100 for each CU.

Specifically, the decoding unit 210 of the image decoding apparatus 200 decodes the coded stream generated by the image coding apparatus 100 by a predetermined decoding method corresponding to the coding method in the coding unit 114. Accordingly, the decoding unit 210 generates coding parameters (header information Hinfo, prediction information Pinfo, transform information Tinfo, and the like) and a quantized transform coefficient level, level.

The decoding unit 210 sets the CU (PU, TU) to be decoded on the basis of the generated coding parameter. Furthermore, the decoding unit 210 supplies coding parameters to each block. For example, the decoding unit 210 supplies the prediction information Pinfo to the selection unit 211, supplies the transform information Tinfo to the inverse quantization unit 212 and the inverse transform unit 213, and supplies the header information Hinfo to each block. The decoding unit 210 supplies the quantized transform coefficient level, level, to the inverse quantization unit 212.

The selection unit 211 selects a prediction mode of a PU (current block) to be decoded from the intra prediction mode and the inter prediction mode on the basis of the mode information of the prediction information Pinfo supplied from the decoding unit 210.

In a case where the intra prediction mode is selected as the prediction mode of the PU to be decoded, the selection unit 211 selects the intra prediction mode of the intra prediction mode number as the intra prediction mode of the PU to be decoded from the basic intra prediction mode of the Oth line and the extended intra prediction mode of the first and subsequent lines on the basis of the intra prediction mode number in the prediction information Pinfo.

Furthermore, in a case where the intra prediction mode number in the prediction information Pinfo is the intra prediction mode number (hereinafter referred to as a common number) of the intra prediction mode common to the basic intra prediction mode and the extended intra prediction mode, the selection unit 211 selects the line of the line from the Oth to 4th lines as the reference line on the basis of the line number of the prediction information Pinfo.

On the other hand, in a case where the intra prediction mode number in the prediction information Pinfo is not a common number, the selection unit 211 selects the Oth line from lines 0 to 4 as a reference line, because the line number is not included in the prediction information Pinfo.

Furthermore, in the case of selecting the inter prediction mode as the prediction mode of the PU to be decoded, the selection unit 211 selects a motion vector or the like in the prediction information Pinfo as a motion vector or the like of the PU to be decoded.

The selection unit 211 supplies the selected prediction mode, the intra prediction mode number of the intra prediction mode and the line number of the reference line, the motion vector, or the like to the prediction unit 216.

On the basis of the transform information Tinfo supplied from the decoding unit 210, the inverse quantization unit 212 scales (inversely quantizes) the value of the quantized transform coefficient level, level, supplied from the decoding unit 210 and derives the transform coefficient Coeff_IQ. This inverse quantization is similar to inverse quantization performed by the inverse quantization unit 115 (Fig. 2) of the image coding apparatus 100. The inverse quantization unit 212 supplies the transform coefficient Coeff_IQ to the inverse transform unit 213.

On the basis of the transform information Tinfo supplied from the decoding unit 210, the inverse transform unit 213 performs inverse orthogonal transformation and the like on the transform coefficient Coeff_IQ supplied from the inverse quantization unit 212 and derives a prediction residual D'. This inverse orthogonal transformation and the like are similar to the inverse orthogonal transformation and the like performed by the inverse transform unit 116 (Fig. 2) of the image coding apparatus 100. The inverse transform unit 213 supplies the prediction residual D' to the calculation unit 214.

The calculation unit 214 adds the prediction residual D' supplied from the inverse transform unit 213 and the predicted image P corresponding to the prediction residual D' and derives a locally decoded image Rec. The calculation unit 214 reconstructs the decoded image for each picture unit using the obtained locally decoded image Rec and outputs the decoded image thus obtained to the outside of the image decoding apparatus 200. Furthermore, the calculation unit 214 also supplies the locally decoded image Rec to the frame memory 215.

The frame memory 215 reconstructs a decoded image for each picture unit using the locally decoded image Rec supplied from the calculation unit 214, and stores the decoded image in a buffer in the frame memory 215. The frame memory 215 reads the decoded image specified by the prediction unit 216 from the buffer as a reference image and supplies the decoded image thus read to the prediction unit 216. Furthermore, the frame memory 215 may store the header information Hinfo, the prediction information Pinfo, the transformation information Tinfo, and the like related to the generation of the decoded image in a buffer in the frame memory 215.

In a case where the prediction mode supplied from the selection unit 211 is the inter prediction mode, the prediction unit 216 designates a decoded image of a picture different from the current block in the frame memory 215, and acquires the decoded image from the frame memory 215 as a reference image. The prediction unit 216 performs inter prediction on the basis of the motion vector using the reference image. The prediction unit 216 supplies the predicted image P generated as a result thereof to the calculation unit 214.

Furthermore, in a case where the prediction mode supplied from the selection unit 211 is the intra prediction mode, the prediction unit 216 designates the decoded image of the picture identical to the picture of the current block in the frame memory 215 and acquires the designated image from the frame memory 215 as a reference image. Using the reference image, the prediction unit 216 performs intra prediction on the basis of the reference line number and the intra prediction mode number supplied from the selection unit 211. The prediction unit 216 supplies the predicted image P generated as a result thereof to the calculation unit 214.

### (Description of Processing of Image Decoding Apparatus)

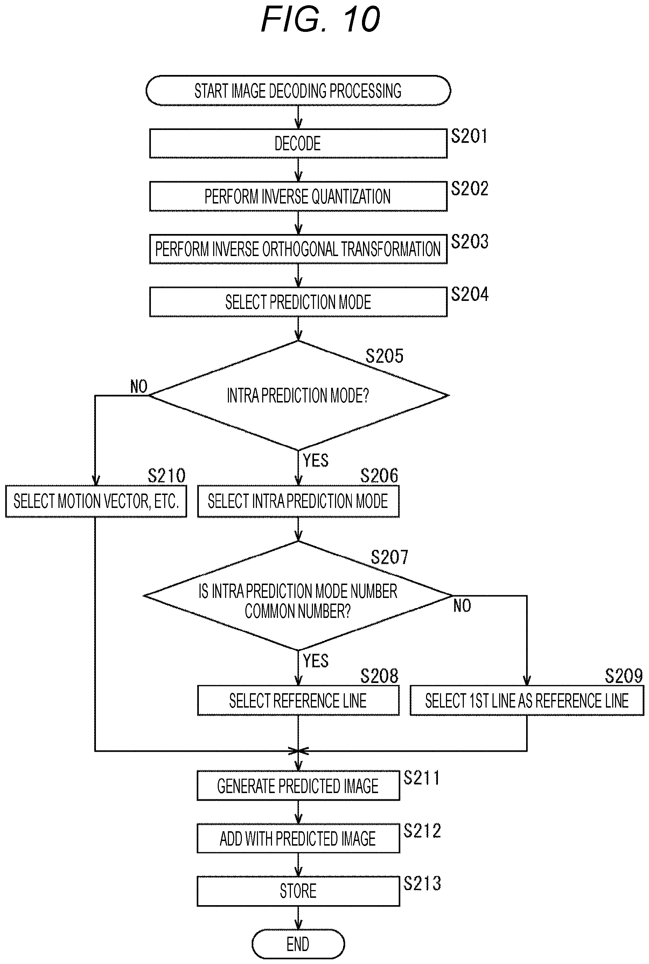

Fig. 10 is a flowchart illustrating image decoding processing of the image decoding apparatus 200 in Fig. 9.

In step S201 of Fig. 10, the decoding unit 210 decodes the coded stream supplied to the image decoding apparatus 200 and obtains the coding parameters (e.g., the header information Hinfo, the prediction information Pinfo, and the transform information Tinfo) and the quantized transform coefficient level, level.

In step S202, the inverse quantization unit 212 inversely quantizes the quantized transform coefficient level, level, obtained by the processing of step S201 and derives the transform coefficient Coeff_IQ. This inverse quantization is an inverse processing of quantization performed in step S105 (Fig. 8) of the image coding processing, and is processing similar to the inverse quantization performed in step S106 (Fig. 8) of the image coding processing.

In step S203, the inverse transform unit 213 performs inverse orthogonal transformation and the like on the transformation coefficient Coeff_IQ obtained in the process in step S202 and derives the prediction residual D'. This inverse transformation is the inverse processing of the transformation processing performed in step S104 (Fig. 8) of the image coding processing, and is processing similar to the inverse transformation performed in step S107 (Fig. 8) of the picture coding processing.

In step S204, the selection unit 211 selects the prediction mode indicated by the mode information in the prediction information Pinfo as the prediction mode of the PU (current block) to be decoded from the intra prediction mode and the inter prediction mode.

In step S205, the selection unit 211 determines whether or not the prediction mode selected in step S204 is an intra prediction mode. In a case where it is determined in step S205 that the mode is the intra prediction mode, the process proceeds to step S206.

In step S206, the selection unit 211 selects the intra prediction mode of the intra prediction mode number out of the prediction information Pinfo from the basic intra prediction mode of the Oth line and the extended intra prediction mode of first and subsequent lines as the intra prediction mode of the PU to be coded.

In step S207, the selection unit 211 determines whether or not the intra prediction mode number of the intra prediction mode selected in step S206 is a common number. In a case where it is determined in step S207 that the number is a common number, the process proceeds to step S208.

In step S208, the selection unit 211 selects the line of the line number out of the prediction information Pinfo from reference lines 0 to 4 as a reference line, and advances the process to step S211.

On the other hand, in a case where it is determined in step S207 that the number is not a common number, the process proceeds to step S209. In step S209, the selection unit 211 selects the Oth line as the reference line from the Oth to 4th lines, and advances the process to step S211.

Furthermore, in a case where it is determined in step S205 that the mode is not the intra prediction mode, the process proceeds to step S210. In step S210, the selection unit 211 selects a motion vector or the like in the prediction information Pinfo as a motion vector or the like of the PU to be decoded, and advances the process to step S211.

In step S211, the prediction unit 216 performs the same prediction as the prediction performed in coding on the basis of the prediction mode and the like selected in step S204, and generates a predicted image P.

Specifically, in a case where the prediction mode selected in step S204 is the intra prediction mode, the prediction unit 216 performs intra prediction and generates the predicted image P on the basis of the intra prediction mode number of the intra prediction mode selected in step S206 and the line number of the reference line selected in step S208 or step S209. On the other hand, in a case where the prediction mode selected in step S204 is the inter prediction mode, the prediction unit 216 performs inter prediction on the basis of the motion vector and the like selected in step S210 to generate a predicted image P.

In step S212, the calculation unit 214 adds the prediction residual D' obtained in the processing in step S203 to the predicted image P obtained in the processing in step S211, and derives a locally decoded image Rec. The calculation unit 214 reconstructs the decoded image for each picture unit using the obtained locally decoded image Rec and outputs the decoded image thus obtained to the outside of the image decoding apparatus 200.

In step S213, the frame memory 215 reconstructs the decoded image for each picture unit using the locally decoded image Rec derived in step S212, and stores the decoded image in the buffer in the frame memory 215.

Upon completion of the process of step S213, the image decoding process is ended.

As described above, the image decoding apparatus 200 selects the reference line and the intra prediction mode, on the basis of the intra prediction mode number set by the image coding apparatus 100, from the basic intra prediction mode of the Oth line and the extended intra prediction mode of the first and subsequent lines. Therefore, the prediction accuracy can be improved compared to the case where the only candidate of the reference line is the Oth line.

### <Second Embodiment>

### (Example of Relationship Between Extension Flag and Candidates of Angular Intra Prediction Mode and Reference Line)

A second embodiment of the image coding apparatus and the image decoding apparatus to which the present disclosure is applied is different from the first embodiment in that the 1-bit extension flag indicating the type of extension of intra prediction is set in the SPS, and the candidates of the intra prediction mode and reference line are changed on the basis of the extension flag.

Specifically, the configuration of the second embodiment of the image coding apparatus to which the present disclosure is applied is identical to the configuration of the image coding apparatus 100 in Fig. 2, except that the setting unit 101B sets the extension flag and that the selection unit 101A changes the candidates of the intra prediction mode and reference line on the basis of the extension flag. Furthermore, the configuration of the second embodiment of the image decoding apparatus to which the present disclosure is applied is identical to the configuration of the image decoding apparatus 200 in Fig. 9, except that the decoding unit 210 decodes the extension flag and that the selection unit 211 changes the candidates of the intra prediction mode and the reference line on the basis of the extension flag. Therefore, in the following description, the explanation other than the relation between the extension flag and the candidates of the intra prediction mode and the reference line will be omitted as appropriate.

Fig. 11 is a diagram illustrating an example of the relationship between the extension flag and candidates of the angular intra prediction mode and the reference line.

As illustrated in Fig. 11, the setting unit 101B sets an extension flag to 0 or 1 on the basis of external input or the like. In a case where the extension flag (extension information) is set to 0, the extension flag indicates that the extension of the intra prediction is extension in the reference direction indicated by the intra prediction mode. Furthermore, in a case where the extension flag is set to 1, the extension flag indicates that the extension of the intra prediction is extension of the reference line.

In a case where the extension flag is 0, the candidates of the angular intra prediction mode with the Oth line being the reference line are extended from 33 angular intra prediction modes in the HEVC to 65 angular intra prediction modes proposed by the JVET. In this case, however, the candidate of the reference line is only the Oth line, as in the HEVC. Therefore, the number of candidates for the angular intra prediction mode in this case is 65 (= 1 × 65).

In other words, the selection unit 101A selects the intra prediction mode from the 67 intra prediction modes proposed by the JVET of line 0, and selects line 0 as the reference line. Therefore, in a case where the selected intra prediction mode is the angular intra prediction mode, the intra prediction information related to the intra prediction set by the setting unit 101B is one of the intra prediction mode number among the intra prediction modes 2 to 66 selected by the selection unit 101A.

On the other hand, in a case where the extension flag is 1, the reference line candidate is extended from the Oth line as the reference line candidate to the Oth to 3rd lines in the HEVC. In this case, however, candidates of the angular intra prediction mode of lines 0 to 3 are included as part of the candidates of the angular intra prediction mode of the Oth line with the extension flag being 0.

Specifically, for example, candidates of the angular intra prediction mode when the Oth line is the reference line are identical to the 33 intra prediction modes in the HEVC in the same reference direction as the reference direction in A of Fig. 5. Furthermore, the candidates for the angular intra prediction mode when the lines 1 to 3 are used as the reference line are all or part of the candidate for the angular intra prediction mode when the Oth line is the reference line.

For example, a first pattern of the candidates of the angular intra prediction mode when the lines 1 to 3 are each set as the reference line is 33 intra prediction modes in the HEVC in the same reference direction as the reference direction indicated in A of Fig. 5. Furthermore, a second pattern is 17 angular intra prediction modes of the same reference direction as the reference direction indicated in B of Fig. 5, obtained by extracting every other angular intra prediction mode of 33 angular intra prediction modes of the first pattern. A third pattern is nine angular intra prediction modes of the same reference direction as the reference direction indicated in C of Fig. 5, obtained by extracting every other angular intra prediction modes of 17 angular intra prediction modes of the second pattern. A fourth pattern is five angular intra prediction modes of the same reference direction as the reference direction indicated in D of Fig. 5, obtained by extracting every other angular intra prediction modes of 9 angular intra prediction modes of the third pattern.

Furthermore, a fifth pattern is six MPMs described in Fig. 6. In a sixth pattern, the candidates of the angular intra prediction mode when using the 1st, 2nd, and 3rd lines as reference lines are the second, the third, and the fourth pattern, respectively.

In a case where the candidate pattern of the angular intra prediction mode is the first pattern, when the first to third lines are each reference line, the number of candidates of the angular intra prediction mode is 132 (= 4 × 33), and 84 (= 1 × 33 + 3 × 17) in the second pattern. Furthermore, the number of candidates of the angular intra prediction mode is 60 (= 1 × 33 + 3 × 9) in the case of the third pattern, and 48 (= 1 × 33 + 3 × 5) in the case of the fourth pattern.

The number of candidates for the angular intra prediction mode is 51 (= 1 × 33 + 3 × 6) in the case of the fifth pattern, and 64 (= 1 × 33 + 1 × 17 + 1 × 9 + 1 × 5) in the case of the sixth pattern. In other words, in the case of the sixth pattern, the number of candidates of the angular intra prediction mode is equal to or smaller than the number of candidates for the angular intra prediction mode in a case where the extension flag is 0.

In a case where the extension flag is 1, the selection unit 101A selects the reference line and intra prediction mode from 33 angular intra prediction modes of the Oth line, the Planer prediction mode, and the DC prediction mode of the Oth line and angular intra prediction mode of the first to third lines.

Accordingly, In a case where the selected intra prediction mode is the angular intra prediction mode, and the candidate for the angular intra prediction mode is the first pattern when each of the first to third lines is the reference line, the intra prediction information set by the setting unit 101B includes any one of line numbers 0 to 3 of the reference lines selected by the selection unit 101A and the intra prediction mode number which is one of intra prediction modes 2 to 34.

Furthermore, in the case of the second to fifth patterns, in a case where the selected angular intra prediction mode is the angular intra prediction mode common to the Oth to 3rd lines, the intra prediction information set by the setting unit 101B includes the line number of the reference line which is any one of 0 to 3 and the intra prediction mode number. On the other hand, in a case where the selected angular intra prediction mode is other than the angular intra prediction mode common to the lines 0 to 3, the intra prediction information set by the setting unit 101B is only the intra prediction mode number.

Furthermore, in the case of the sixth pattern, the intra prediction information set by the setting unit 101B includes the reference line selected by the selection unit 101A and the extended intra prediction mode number of the intra prediction mode. The extended intra prediction mode number is a number assigned for each line and angular intra prediction mode as a number unique to each line and each angular intra prediction mode.

As described above, since the number of candidates for the angular intra prediction mode in the case of the sixth pattern is 64, the extended intra prediction mode number assigned for each line and angular intra prediction mode is 2 to 65. Accordingly, for example, by setting the intra prediction mode in which the extended intra prediction mode number is 66 to the reserve mode, the possible values of the extended intra prediction mode number can be made equal to 67 intra prediction mode numbers proposed by the JVET. As a result, compatibility with the coding scheme proposed by the JVET in which 67 intra prediction modes are candidates can be improved.

Note that, in the example of Fig. 11, the intra prediction mode is extended from the intra prediction mode in the HEVC, but the intra prediction mode may be extended from the intra prediction mode in the Advanced Video Coding (AVC).

### (Intra Prediction Mode in HEVC)

Fig. 12 is a diagram illustrating 35 intra prediction modes in the HEVC.

As illustrated in Fig. 12, the 35 intra prediction modes in the HEVC include the Planar prediction mode in which the intra prediction mode number is 0, the DC prediction mode in which the intra prediction mode number is 1, and 33 angular intra prediction modes in which the intra prediction mode numbers from 2 to 34.

33 angular intra prediction modes are different from 33 extended intra prediction modes of A in Fig. 5 in that intra prediction mode numbers are consecutive values of 2 to 34.

As described above, in the second embodiment, the image coding apparatus 100 and the image decoding apparatus 200 perform intra prediction on the current block on the basis of the extension flag. Therefore, for example, the image coding apparatus 100 and the image decoding apparatus 200 extend the candidates of the intra prediction mode on the basis of the extension flag, and can perform intra prediction on the basis of the intra prediction mode selected from the extended candidates and the reference line.

In this case, the intra prediction mode and the reference line candidate can be optimized. Therefore, compared to the case where 67 intra prediction modes of Oth to 3rd lines are candidates, the load of the processing of selecting the intra prediction mode and the reference line according to the RDO can be reduced. Therefore, it is possible to reduce the overhead such as the load of the coding processing and the time required for the coding processing. Furthermore, compared to the case where the intra prediction mode and the reference line candidate are always fixed, the appropriateness of the selected intra prediction mode and the reference line is improved, and the prediction accuracy is improved.

For example, in a case where the pattern of the angular intra prediction mode of lines 1 to 3 is the sixth pattern, compared to the case where 67 intra prediction modes of the Oth line are candidates, the load of processing of selecting the intra prediction mode and the reference line does not increase. However, on the basis of the extension flag, more suitable mode is selected as the candidate from 67 intra prediction modes of the Oth line and the intra prediction mode of Oth to 3rd lines including the angular intra prediction mode of the 1st to 3rd lines of the 6th pattern. Therefore, compared to the case where either one of the intra prediction modes and the reference line is always selected as a candidate, the appropriateness of the selected intra prediction mode and the reference line is improved, and the prediction accuracy is improved.

Furthermore, it is possible to set the type of extension more appropriately, because the image coding apparatus 100 according to the second embodiment sets the extension flag for each sequence. In other words, the type of optimal extension of intra prediction is considered to be different for each sequence. Therefore, the image coding apparatus 100 can set a more suitable expansion type by setting the extension flag for each sequence.

Note that, in the second embodiment, the extension flag is set for each sequence and included in SPS, but may also be set for each picture unit and included in PPS.

Furthermore, the candidate patterns of the angular intra prediction mode of lines 1 to 3 may be determined in advance or may be made selectable. In a case where candidate patterns of angular intra prediction mode of lines 1 to 3 are made selectable, information indicating the pattern is set by the image coding apparatus 100 and transmitted to the image decoding device 200.

### <Third Embodiment>

### <Description of Computer to Which Present Disclosure is Applied>

A series of processing steps described above can be executed by hardware or can be executed by software. In a case where the series of processing steps is executed by software, a program constituting the software is installed in a computer. Here, the computer includes a computer that is incorporated in dedicated hardware, a computer that can execute various functions by installing various programs, such as a general personal computer, and the like.

Fig. 13 is a block diagram illustrating a configuration example of hardware of a computer for executing the series of processing steps described above with a program.

In a computer 800, a Central Processing Unit (CPU) 801, a Read Only Memory (ROM) 802, and a Random Access Memory (RAM) 803 are connected to one another via a bus 804.

Furthermore, an input/output interface 810 is connected to the bus 804. To the input/output interface 810, an input unit 811, an output unit 812, a storage unit 813, a communication unit 814, and a drive 815 are connected.

The input unit 811 includes a keyboard, a mouse, a microphone, and the like. The output unit 812 includes a display, a speaker, and the like. The storage unit 813 includes a hard disk, a nonvolatile memory, and the like. The communication unit 814 includes a network interface and the like. The drive 815 drives a removable medium 821 such as a magnetic disk, an optical disk, a magneto-optical disk, or a semiconductor memory.

In the computer 800 configured as described above, the CPU 801, for example, loads the program stored in the storage unit 813 to the RAM 803 via the input/output interface 810 and the bus 804 and executes the program. Accordingly, the series of processing steps described above is executed.

The program executed by the computer 800 (CPU 801) can be provided with being recorded in the removable medium 821 provided as a packaged medium or the like. Furthermore, the program can also be provided via a wired or wireless transmission medium, such as a local area network, the Internet, or digital satellite broadcasting.

In the computer 800, the program can be installed in the storage unit 813 via the input/output interface 810 by inserting the removable medium 821 into the drive 815. Furthermore, the program can be received by the communication unit 814 via a wired or wireless transmission medium and installed in the storage unit 813. In addition, the program can be installed in advance in the ROM 802 or the storage unit 813.

Note that the program executed by the computer 800 can be a program for which processing steps are carried out in a chronological order along a sequence described in this specification, or can be a program for which processing steps are carried out in parallel or at appropriate timing when called, for example.

### <Fourth Embodiment>

Fig. 14 illustrates an example of a schematic configuration of a television device to which the above-described embodiment is applied. The television device 900 includes an antenna 901, a tuner 902, a demultiplexer 903, a decoder 904, a video signal processing unit 905, a display unit 906, an audio signal processing unit 907, a speaker 908, an external interface (I/F) unit 909, a control unit 910, a user interface (I/F) unit 911, and a bus 912.

The tuner 902 extracts a signal of a desired channel from the broadcast signal received via the antenna 901 and demodulates the extracted signal. Then, the tuner 902 outputs the coded bit stream obtained by the demodulation to the demultiplexer 903. That is, the tuner 902 has a role as a transmission unit in the television device 900 that receives the coded stream in which the image is encoded.

The demultiplexer 903 separates the video stream and the audio stream of the program to be viewed from the encoded bit stream and outputs the separated streams to the decoder 904. Furthermore, the demultiplexer 903 extracts auxiliary data such as Electronic Program Guide (EPG) from the encoded bit stream, and supplies the extracted data to the control unit 910. Note that the demultiplexer 903 may descramble in a case where the encoded bit stream is scrambled.

The decoder 904 decodes the video stream and audio stream input from the demultiplexer 903. Then, the decoder 904 outputs the video data generated by the decoding processing to the video signal processing unit 905. Furthermore, the decoder 904 outputs the audio data generated by the decoding processing to the audio signal processing unit 907.

The video signal processing unit 905 reproduces the video data input from the decoder 904 and displays the video on the display unit 906. Furthermore, the video signal processing unit 905 may cause the display unit 906 to display an application screen supplied via the network. Furthermore, the video signal processing unit 905 may perform additional processing, such as noise removal, for the video data according to the setting, for example. Furthermore, the video signal processing unit 905 may generate, for example, a Graphical User Interface (GUI) image, such as a menu, a button, or a cursor and superimpose the generated image on the output image.

The display unit 906 is driven by the drive signal supplied from the video signal processing unit 905 and displays the video or image on the video plane of a display device (e.g., a liquid crystal display, a plasma display, or an Organic Electro Luminescence Display (OELD) (e.g., organic EL display).

The audio signal processing unit 907 performs reproduction processing, such as D/A conversion and amplification, on the audio data input from the decoder 904, and outputs audio from the speaker 908. Furthermore, the audio signal processing unit 907 may perform additional processing such as noise removal for the audio data.

The external interface unit 909 is an interface for connecting the television device 900 to an external device or a network. For example, the video stream or the audio stream received via the external interface unit 909 may be decoded by the decoder 904. In other words, the external interface unit 909 also functions as a transmission unit in the television device 900 that receives the coded stream in which the image is coded.

The control unit 910 includes a processor such as a CPU, and memories such as a RAM and a ROM. The memory stores programs executed by the CPU, program data, EPG data, data acquired via the network, and the like. The program stored by the memory is read and executed by the CPU, for example at the time of activation of the television device 900. By executing the program, the CPU controls the operation of the television device 900 according to, for example, an operation signal input from the user interface unit 911.

The user interface unit 911 is connected to the control unit 910. The user interface unit 911 has, for example, buttons and switches for the user to operate the television device 900, a reception unit of a remote control signal, and the like. The user interface unit 911 detects operation by the user via these components, generates an operation signal, and outputs the generated operation signal to the control unit 910.

The bus 912 mutually connects the tuner 902, the demultiplexer 903, the decoder 904, the video signal processing unit 905, the audio signal processing unit 907, the external interface unit 909, and the control unit 910.

In the television device 900 configured as described above, the decoder 904 may have the function of the image decoding apparatus 200 described above. That is, the decoder 904 may decode the coded data by the method described in the above embodiments. By doing this, the television device 900 can obtain the similar to the effect of the embodiments described above with reference to Figs. 1 to 12.

Furthermore, in the television device 900 configured as described above, the video signal processing unit 905 may encode, for example, the image data supplied from the decoder 904 and supplies the obtained coded data to the external interface unit 909 to output to the outside of the television device 900. Then, the video signal processing unit 905 may have the function of the image coding apparatus 100 described above. That is, the video signal processing unit 905 may encode the image data supplied from the decoder 904 by the method described in the above embodiments. By doing this, the television device 900 can obtain the similar to the effect of the embodiments described above with reference to Figs. 1 to 12.

### <Fifth Embodiment>

Fig. 15 illustrates an example of a schematic configuration of a mobile phone to which the above-described embodiment is applied. The mobile phone 920 includes an antenna 921, a communication unit 922, an audio codec 923, a speaker 924, a microphone 925, a camera unit 926, an image processing unit 927, a demultiplexing unit 928, a recording/reproducing unit 929, a display unit 930, a control unit 931, an operation unit 932, and a bus 933.

The antenna 921 is connected to the communication unit 922. The speaker 924 and the microphone 925 are connected to the audio codec 923. The operation unit 932 is connected to the control unit 931. The bus 933 mutually connects the communication unit 922, the audio codec 923, the camera unit 926, the image processing unit 927, the demultiplexing unit 928, the recording/reproducing unit 929, the display unit 930, and the control unit 931.

The mobile phone 920 performs various operations, such as transmission and reception of audio signals, transmission and reception of electronic mails or image data, imaging of images, and recording of data, in various operation modes including a voice call mode, a data communication mode, a photographing mode, and a videophone mode.

In the voice call mode, the analog audio signal generated by the microphone 925 is supplied to the audio codec 923. The audio codec 923 converts the analog audio signal into audio data, and performs A/D conversion and compression of the converted audio data. Then, the audio codec 923 outputs the compressed audio data to the communication unit 922. The communication unit 922 encodes and modulates voice data and generates a transmission signal. Then, the communication unit 922 transmits the generated transmission signal to the base station (not illustrated) via the antenna 921. Furthermore, the communication unit 922 amplifies the radio signal received via the antenna 921 and converts the frequency, and acquires a received signal. Then, the communication unit 922 demodulates and decodes the received signal to generate voice data, and outputs the generated voice data to the audio codec 923. The audio codec 923 decompresses and performs D/A conversion of the audio data to generate an analog audio signal. Then, the audio codec 923 supplies the generated audio signal to the speaker 924 to output audio.

Furthermore, in the data communication mode, the control unit 931 generates, for example, character data constituting e-mails according to an operation by the user via the operation unit 932. Furthermore, the control unit 931 displays characters on the display unit 930. Furthermore, the control unit 931 generates e-mail data in response to a transmission instruction from the user via the operation unit 932, and outputs the generated e-mail data to the communication unit 922. The communication unit 922 encodes and modulates the e-mail data, and generates a transmission signal. Then, the communication unit 922 transmits the generated transmission signal to the base station (not illustrated) via the antenna 921. Furthermore, the communication unit 922 amplifies the radio signal received via the antenna 921 and converts the frequency, and acquires a received signal. Then, the communication unit 922 demodulates and decodes the received signal to restore the e-mail data, and outputs the restored e-mail data to the control unit 931. The control unit 931 causes the display unit 930 to display the contents of the e-mail, and also supplies the e-mail data to the recording/reproducing unit 929 to write the e-mail data in the storage medium.

The recording/reproducing unit 929 has an arbitrary storage medium that can be read and written. For example, the storage medium may be a built-in storage medium such as a RAM or a flash memory, or may be an externally mounted storage medium such as a hard disk, a magnetic disk, a magneto-optical disk, an optical disk, a Universal Serial Bus (USB) memory, or a memory card.

Furthermore, in the photographing mode, for example, the camera unit 926 captures an image of an object, generates image data, and outputs the generated image data to the image processing unit 927. The image processing unit 927 encodes the image data input from the camera unit 926, supplies the coded stream to the recording/reproducing unit 929, and writes the coded stream on the storage medium.

Moreover, in the image display mode, the recording/reproducing unit 929 reads the coded stream recorded in the storage medium and outputs the coded stream to the image processing unit 927. The image processing unit 927 decodes the coded stream input from the recording/reproducing unit 929, supplies the image data to the display unit 930 to display the image.

Furthermore, in the videophone mode, for example, the demultiplexing unit 928 multiplexes the video stream encoded by the image processing unit 927 and the audio stream input from the audio codec 923, and supplies the multiplexed stream to the communication unit 922. The communication unit 922 encodes and modulates the stream, and generates a transmission signal. Then, the communication unit 922 transmits the generated transmission signal to the base station (not illustrated) via the antenna 921. Furthermore, the communication unit 922 amplifies the radio signal received via the antenna 921 and converts the frequency, and acquires a received signal. These transmission and received signals may include a coded bit stream. Then, the communication unit 922 demodulates and decodes the received signal to restore the stream, and outputs the restored stream to the demultiplexing unit 928. The demultiplexing unit 928 separates the video stream and the audio stream from the input stream, and outputs the video stream to the image processing unit 927 and the audio stream to the audio codec 923. The image processing unit 927 decodes the video stream and generates video data. The video data is supplied to the display unit 930, and the display unit 930 displays a series of images. The audio codec 923 decompresses and performs D/A conversion of the audio stream to generate an analog audio signal. Then, the audio codec 923 supplies the generated audio signal to the speaker 924 to output audio.

In the mobile phone 920 configured as described above, the image processing unit 927, for example, may have the function of the above-described image coding apparatus 100. That is, the image processing unit 927 may encode the image data by the method described in the above embodiments. By doing this, the mobile phone 920 can obtain the effect similar to the effect of the embodiments described above with reference to Figs. 1 to 12.

Furthermore, in the mobile phone 920 configured as described above, the image processing unit 927, for example, may have the function of the image decoding apparatus 200 described above. That is, the image processing unit 927 may decode the coded data by the method described in the above embodiments. By doing this, the mobile phone 920 can obtain the effect similar to the effect of the embodiments described above with reference to Figs. 1 to 12.

### <Sixth Embodiment>

Fig. 16 illustrates an example of a schematic configuration of a recording/reproducing device to which the above-described embodiment is applied. For example, the recording/reproducing device 940 encodes the audio data and the video data of the received broadcast program and records the coded audio and video data in the recording medium. Furthermore, the recording/reproducing device 940 may encode audio data and video data acquired from other apparatuses, for example, and records the coded audio and video data in the recording medium. Furthermore, the recording/reproducing device 940, for example, reproduces data, which is recorded in the recording medium, on the monitor and the speaker in response to an instruction from the user. At this time, the recording/reproducing device 940 decodes the audio data and the video data.

The recording/reproducing device 940 includes a tuner 941, an external interface (I/F) unit 942, an encoder 943, a hard disk drive (HDD) unit 944, a disk drive 945, a selector 946, a decoder 947, an on-screen display (OSD) unit 948, a control unit 949, and a user interface (I/F) unit 950.

The tuner 941 extracts a signal of a desired channel from a broadcast signal received via an antenna (not illustrated), and demodulates the extracted signal. Then, the tuner 941 outputs the coded bit stream obtained by the demodulation to the selector 946. In other words, the tuner 941 serves as a transmission unit in the recording/reproducing device 940.

The external interface unit 942 is an interface for connecting the recording/reproducing device 940 to an external device or a network. The external interface unit 942 may be, for example, an Institute of Electrical and Electronic Engineers (IEEE) 1394 interface, a network interface, a USB interface, a flash memory interface, or the like. For example, video data and audio data received via the external interface unit 942 are input to the encoder 943. In other words, the external interface unit 942 serves as a transmission unit in the recording/reproducing device 940.

The encoder 943 encodes the video data and the audio data in a case where the video data and the audio data input from the external interface unit 942 are not coded. Then, the encoder 943 outputs the encoded bit stream to the selector 946.

The HDD unit 944 records an encoded bit stream in which content data such as video and audio is compressed, various programs, and other data in an internal hard disk. Furthermore, the HDD unit 944 reads these data from the hard disk at the time of reproducing video and audio.

The disk drive 945 performs recording and reading of data to and from the loaded recording medium. Examples of the recording medium disposed on the disk drive 945 include a Digital Versatile Disk (DVD) (DVD-Video, DVD-Random Access Memory (DVD-RAM), DVD-Recordable (DVD-R), DVD-Rewritable (DVD-RW), DVD + Recordable (DVD+R), DVD + Rewritable (DVD+RW), or the like), or a Blu-ray (registered trademark) disk.

The selector 946 selects a coded bit stream input from the tuner 941 or the encoder 943 at the time of recording video and audio, and outputs the selected coded bit stream to the HDD 944 or the disk drive 945. Furthermore, the selector 946 outputs the coded bit stream input from the HDD 944 or the disk drive 945 to the decoder 947 at the time of reproducing video and audio.

The decoder 947 decodes the coded bit stream and generates video data and audio data. Then, the decoder 947 outputs the generated video data to the OSD unit 948. Furthermore, the decoder 947 outputs the generated audio data to an external speaker.

The OSD unit 948 reproduces the video data input from the decoder 947 and displays the video. Furthermore, the OSD unit 948 may superimpose, for example, a GUI image such as a menu, a button, or a cursor on the video to be displayed.

The control unit 949 includes a processor such as a CPU, and memories such as a RAM and a ROM. The memory stores programs executed by the CPU, program data, and the like. The program stored by the memory is read and executed by the CPU, for example, at the time of activation of the recording/reproducing device 940. By executing the program, the CPU controls the operation of the recording/reproducing device 940 on the basis of, for example, an operation signal input from the user interface unit 950.

The user interface unit 950 is connected to the control unit 949. The user interface unit 950 has, for example, buttons, switches, and the like for the user to operate the recording/reproducing device 940, a receiving unit of a remote control signal, and the like. The user interface unit 950 detects operation by the user via these components, generates an operation signal, and outputs the generated operation signal to the control unit 949.

In the recording/reproducing device 940 configured as described above, the encoder 943, for example, may have the function of the image coding apparatus 100 described above. That is, the encoder 943 may encode the image data by the method described in the above embodiments. By doing this, the recording/reproducing device 940 can obtain the effect similar to the effect of the embodiments described above with reference to Figs. 1 to 12.

Furthermore, in the recording/reproducing device 940 configured as described above, the decoder 947, for example, may have the function of the image decoding apparatus 200 described above. That is, the decoder 947 may decode the coded data by the method described in the above embodiments. By doing this, the recording/reproducing device 940 can obtain the effect similar to the effect of the embodiments described above with reference to Figs. 1 to 12.

### <Seventh Embodiment>

Fig. 17 illustrates an example of a schematic configuration of an imaging device to which the above-described embodiment is applied. The imaging device 960 captures an image of a subject, generates an image, encodes the image data, and records the encoded image data in a recording medium.

The imaging device 960 includes an optical block 961, an imaging unit 962, a signal processing unit 963, an image processing unit 964, a display unit 965, an external interface (I/F) unit 966, a memory unit 967, a media drive 968, an OSD unit 969, a control Unit 970, a user interface (I/F) unit 971, and a bus 972.

The optical block 961 is connected to the imaging unit 962. The imaging unit 962 is connected to the signal processing unit 963. The display unit 965 is connected to the image processing unit 964. The user interface unit 971 is connected to the control unit 970. The bus 972 mutually connects the image processing unit 964, the external interface unit 966, the memory unit 967, the media drive 968, the OSD unit 969, and the control unit 970.

The optical block 961 has a focus lens, a diaphragm mechanism, and the like. The optical block 961 forms an optical image of the subject on the imaging surface of the imaging unit 962. The imaging unit 962 has an image sensor such as a Charge Coupled Device (CCD) or Complementary Metal Oxide Semiconductor (CMOS), and converts the optical image formed on the imaging surface into an image signal as an electric signal by photoelectric conversion. Then, the imaging unit 962 outputs the image signal to the signal processing unit 963.

The signal processing unit 963 performs various camera signal processing such as knee correction, gamma correction, and color correction on the image signal input from the imaging unit 962. The signal processing unit 963 outputs the image data after the camera signal processing to the image processing unit 964.

The image processing unit 964 encodes the image data input from the signal processing unit 963, and generates coded data. Then, the image processing unit 964 outputs the generated coded data to the external interface unit 966 or the media drive 968. Furthermore, the image processing unit 964 decodes coded data input from the external interface unit 966 or the media drive 968, and generates image data. Then, the image processing unit 964 outputs the generated image data to the display unit 965. Furthermore, the image processing unit 964 may output the image data input from the signal processing unit 963 to the display unit 965 to display the image. Furthermore, the image processing unit 964 may superimpose the display data acquired from the OSD unit 969 on the image to be output to the display unit 965.

The OSD unit 969 generates, for example, GUI images, such as a menu, a button, or a cursor, and outputs the generated images to the image processing unit 964.

The external interface unit 966 is configured as, for example, a USB input/output terminal. The external interface unit 966 connects, for example, the imaging device 960 and the printer at the time of printing an image. Furthermore, a drive is connected to the external interface unit 966, as necessary. For example, a removable medium, such as a magnetic disk or an optical disk, is loaded in the drive, and a program read from the removable medium can be installed in the imaging device 960. Furthermore, the external interface unit 966 may be configured as a network interface connected to a network such as a LAN or the Internet. In other words, the external interface unit 966 serves as a transmission unit in the imaging device 960.

The recording medium loaded in the media drive 968 may be, for example, any removable medium that can be read and written, such as a magnetic disk, a magneto-optical disk, an optical disk, or a semiconductor memory. Furthermore, a recording medium is fixedly attached to the media drive 968, and a non-portable storage unit such as a built-in hard disk drive or a Solid State Drive (SSD), for example, may be configured.

The control unit 970 includes a processor such as a CPU, and memories such as a RAM and a ROM. The memory stores programs executed by the CPU, program data, and the like. The program stored in the memory is read and executed by the CPU, for example, at the time of activation of the imaging device 960. By executing the program, the CPU controls the operation of the imaging device 960, for example, according to an operation signal input from the user interface unit 971.

The user interface unit 971 is connected to the control unit 970. The user interface unit 971 has, for example, buttons and switches for the user to operate the imaging device 960. The user interface unit 971 detects operation by the user via these components, generates an operation signal, and outputs the generated operation signal to the control unit 970.

In the imaging device 960 configured as described above, for example, the image processing unit 964 may have the function of the above-described image coding apparatus 100. That is, the image processing unit 964 may encode the image data by the method described in the above embodiments. By doing this, the imaging device 960 can obtain the effect similar to the effect of the embodiments described above with reference to Figs. 1 to 12.

Furthermore, in the imaging device 960 configured as described above, the image processing unit 964, for example, may have the function of the above-described image decoding apparatus 200. That is, the image processing unit 964 may decode the coded data by the method described in each of the above embodiments. By doing this, the imaging device 960 can obtain the effect similar to the effect of the embodiments described above with reference to Figs. 1 to 12.

### <Eighth Embodiment>

Furthermore, the present technology can be applied to any configuration to be mounted on an apparatus constituting an arbitrary apparatus or system, for example, a processor as a system LSI (Large Scale Integration) or the like, a module using a plurality of processors or the like, a unit using a plurality of modules or the like, or a unit with additional other functions and implemented as a set or the like (i.e., a part of the configuration of the apparatus). Fig. 18 illustrates an example of a schematic configuration of a video set to which the present technology is applied.

In recent progress of multifunctionalities of electronic devices, the development and manufacture of such electronic devices comes to often involve, in a case where a part of the configuration is implemented for, e.g., retailing and offering purposes, not only the implementation as a configuration having one function, but also the implementation as a combination of a plurality of configurations having a plurality of functions as a set.

A video set 1300 illustrated in Fig. 18 has such a multifunctional configuration in which a device having a function relating to (one or both of) coding and decoding of the image is combined with devices having other functions related to the above function.

As illustrated in Fig. 18, the video set 1300 includes modules, such as a video module 1311, an external memory 1312, a power management module 1313, and a front end module 1314, and devices having related functions, such as a connectivity 1321, a camera 1322, and a sensor 1323.

A module is a set of functions of related parts formed as a part having a coherent function. For example, a configuration in which a plurality of processors each having a function, electronic circuit elements such as resistors and capacitors, and other devices are provided and integrated on a wiring substrate or the like may be conceivable, although a specific configuration may physically vary. Furthermore, it is also conceivable to combine modules with other modules, processors, or the like to form a new module.

In the example of Fig. 18, the video module 1311 is combined with components having functions related to image processing, and includes an application processor, a video processor, a broadband modem 1333, and an RF module 1334.

A processor has a configuration having predetermined functions integrated on a semiconductor chip by System On a Chip (SoC), and some are called, for example, system LSI (Large Scale Integration) or the like. The configuration having this predetermined function may be a logic circuit (hardware configuration), or a configuration including a CPU, a ROM, a RAM, and the like combined with a program that is executed using these components (software configuration), or a combination of both configurations. For example, the processor includes a logic circuit with the CPU, ROM, RAM, and the like, and part of their functions is implemented by a logic circuit (hardware configuration), while other functions are implemented by a program (software configuration) that is executed in the CPU.

The application processor 1331 in Fig. 18 is a processor that executes an application related to image processing. This application executed by the application processor 1331 can perform not only arithmetic processing, but also controlling the inside and outside of the video module 1311, such as the video processor 1332, as necessary, to achieve a predetermined function.

The video processor 1332 is a processor having functions relating to (one or both of) encoding/decoding of images.

The broadband modem 1333 digitally modulates data (digital signal) to be transmitted by wired or wireless (or both) broadband communication performed through a broadband line, such as the Internet or a public telephone line network, to an analog signal, for example, or converts the analog signal received by the wideband communication to data (digital signal) by demodulating an analog signal received by the broadband communication. The broadband modem 1333 processes, for example, arbitrary information such as image data processed by the video processor 1332, a stream in which the image data is encoded, an application program, and setting data.

The RF module 1334 is a module that performs frequency conversion, modulation/demodulation, amplification, filtering, and the like on a Radio Frequency (RF) signal transmitted and received via an antenna. For example, the RF module 1334 performs frequency conversion and the like on the baseband signal generated by the broadband modem 1333 to generate an RF signal. Furthermore, for example, the RF module 1334 performs frequency conversion and the like on the RF signal received via the front end module 1314 to generate a baseband signal.

Note that, as illustrated by a dotted line 1341 in Fig. 18, the application processor 1331 and the video processor 1332 may be integrated into a single processor.

The external memory 1312 is a module provided outside the video module 1311 and having a storage device used by the video module 1311. The storage device of the external memory 1312 may be formed in any physical configuration, but typically, it is often used for storing large capacity data such as image data for each frame. It is thus desirable to use a relatively inexpensive and large capacity semiconductor memory such as a Dynamic Random Access Memory (DRAM) to form the storage device.

The power management module 1313 manages and controls power supply to the video module 1311 (each component in the video module 1311) .

The front end module 1314 is a module that provides a front-end function (a circuit at the transmitting and receiving end on the antenna side) to the RF module 1334. As illustrated in Fig. 18, the front end module 1314 includes, for example, an antenna unit 1351, a filter 1352, and an amplifying unit 1353.

The antenna unit 1351 has an antenna for transmitting and receiving radio signals and its peripheral configuration. The antenna unit 1351 transmits the signal supplied from the amplifying unit 1353 as a radio signal, and supplies the received radio signal to the filter 1352 as an electric signal (RF signal). The filter 1352 performs filter processing or the like on the RF signal received via the antenna unit 1351, and supplies the processed RF signal to the RF module 1334. The amplifying unit 1353 amplifies the RF signal supplied from the RF module 1334 and supplies the amplified signal to the antenna unit 1351.

The connectivity 1321 is a module having a function related to connection with the outside. The connectivity 1321 may be provided in any physical configuration. For example, the connectivity 1321 has a configuration including a communication function other than the communication standard corresponding to the broadband modem 1333, an external input/output terminal, and the like.

For example, the connectivity 1321 may include a module having a communication function compliant with the wireless communication standard, such as Bluetooth (registered trademark), IEEE 802.11 (e.g., Wireless Fidelity (Wi-Fi, registered trademark)), Near Field Communication (NFC), or Infra Red Data Association (IrDA)), an antenna transmitting/receiving signals compliant with such a standard, and the like. Furthermore, the connectivity 1321 may include, for example, a module having a communication function compliant with a wired communication standard, such as Universal Serial Bus (USB), or High-Definition Multimedia Interface (HDMI, registered trademark), and a terminal compliant with such a standard. Furthermore, the connectivity 1321 may include, for example, other data (signal) transmission functions, such as analog input/output terminals and the like.

Note that the connectivity 1321 may include a device to which data (signal) is transmitted. For example, the connectivity 1321 may include a drive (including a hard disk, a Solid State Drive (SSD), a Network Attached Storage (NAS), or the like, in addition to the drive for the removable medium) which reads and writes data to and from a recording medium, such as a magnetic disk, an optical disk, or a magneto-optical disk. Furthermore, the connectivity 1321 may include an image or sound output device (e.g., a monitor and a speaker).

The camera 1322 is a module having a function of imaging a subject and obtaining image data of the subject. The image data obtained by imaging by the camera 1322 is supplied, for example, to the video processor 1332 and encoded.

The sensor 1323 may be a module, for example, having any sensor function, such as an audio sensor, an ultrasonic sensor, an optical sensor, an illuminance sensor, an infrared sensor, an image sensor, a rotation sensor, an angle sensor, an angular velocity sensor, a velocity sensor, an acceleration sensor, a tilt sensor, a magnetic identification sensor, an impact sensor, or a temperature sensor. The data detected by the sensor 1323 is supplied to, for example, the application processor 1331 and used by an application or the like.

The configuration described as a module in the above may be implemented as a processor, or conversely, a configuration described as a processor may be implemented as a module.

In the video set 1300 configured as described above, the present technology can be applied to the video processor 1332 as described later. Therefore, the video set 1300 can be implemented as a set to which the present technology is applied.

### (Configuration Example of Video Processor)

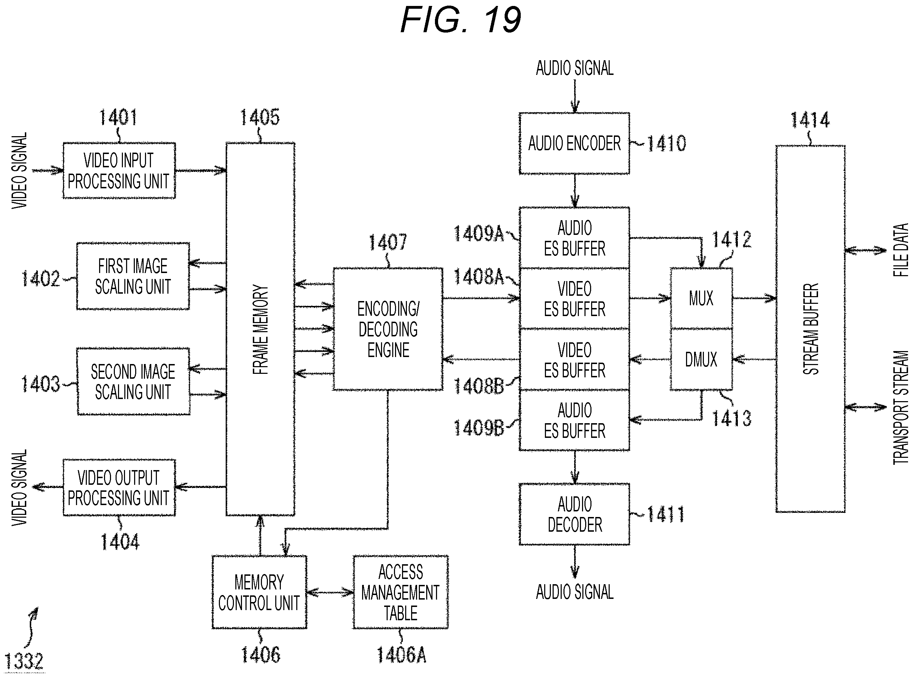

Fig. 19 illustrates a schematic configuration of an example of a video processor 1332 (Fig. 18) to which the present technology is applied.

In the case of the example of Fig. 19, the video processor 1332 has a function of receiving input of a video signal and an audio signal and coding the video signal and the audio signal in a predetermined manner, and a function of decoding the coded video data and audio data and reproducing and outputting the video signal and the audio signal.

As illustrated in Fig. 19, the video processor 1332 includes a video input processing unit 1401, a first image scaling unit 1402, a second image scaling unit 1403, a video output processing unit 1404, a frame memory 1405, a memory control unit 1406. Furthermore, the video processor 1332 includes an encoding/decoding engine 1407, video Elementary Stream (ES) buffers 1408A and 1408B, and audio ES buffers 1409A and 1409B. Moreover, the video processor 1332 includes an audio encoder 1410, an audio decoder 1411, a multiplexing unit (Multiplexer (MUX)) 1412, a demultiplexing unit (Demultiplexer (DMUX)) 1413, and a stream buffer 1414.

The video input processing unit 1401 acquires, for example, the video signal input from the connectivity 1321 (Fig. 18) or the like and converts the video signal into digital image data. The first image scaling unit 1402 performs format conversion, image scaling processing, and the like on the image data. The second image scaling unit 1403 performs, for example, scaling processing on the image on the basis of the format to be output via the video output processing unit 1404, or format conversion and scaling processing of the image similarly to the first image scaling unit 1402. The video output processing unit 1404 performs, for example, format conversion and conversion to an analog signal of the image data, and outputs the analog signal as a reproduced video signal to, for example, the connectivity 1321 or the like.

The frame memory 1405 is a memory for image data shared by the video input processing unit 1401, the first image scaling unit 1402, the second image scaling unit 1403, the video output processing unit 1404, and the encoding/decoding engine 1407. The frame memory 1405 is implemented as, for example, a semiconductor memory such as a DRAM.

The memory control unit 1406 receives a synchronization signal from the encoding/decoding engine 1407 and controls write/read access to the frame memory 1405 according to the access schedule to the frame memory 1405 written in an access management table 1406A. The access management table 1406A is updated by the memory control unit 1406 in accordance with processing executed by the encoding/decoding engine 1407, the first image scaling unit 1402, the second image scaling unit 1403, and the like.

The encoding/decoding engine 1407 performs encoding processing of image data and decoding processing of a video stream which is coded image data. For example, the encoding/decoding engine 1407 encodes the image data read from the frame memory 1405 and sequentially writes the encoded image data in the video ES buffer 1408A as a video stream. Furthermore, the video streams are sequentially read, for example, from the video ES buffer 1408B and decoded, and sequentially written in the frame memory 1405 as image data. The encoding/decoding engine 1407 uses the frame memory 1405 as a work area in the coding and decoding. Furthermore, the encoding/decoding engine 1407 outputs, for example, a synchronization signal to the memory control unit 1406 at the timing of starting the processing for each macroblock.

The video ES buffer 1408A buffers the video stream generated by the encoding/decoding engine 1407 and supplies the buffered video stream to the multiplexing unit (MUX) 1412. The video ES buffer 1408B buffers the video stream supplied from the demultiplexing unit (DMUX) 1413 and supplies the buffered video stream to the encoding/decoding engine 1407.

The audio ES buffer 1409A buffers the audio stream generated by the audio encoder 1410 and supplies the buffered audio stream to the multiplexing unit (MUX) 1412. The audio ES buffer 1409B buffers the audio stream supplied from the demultiplexing unit (DMUX) 1413 and supplies the buffered audio stream to the audio decoder 1411.

The audio encoder 1410 digitally converts, for example, an audio signal input from the connectivity 1321 or the like, and encodes, for example, the audio signal by a predetermined method, such as the MPEG audio method or an audio code number 3 (AC3) system. The audio encoder 1410 sequentially writes an audio stream, which is data in which the audio signal is coded, in the audio ES buffer 1409A. The audio decoder 1411 decodes the audio stream supplied from the audio ES buffer 1409B, converts the audio stream into, for example, an analog signal, and supplies the audio stream as a reproduced audio signal to, for example, the connectivity 1321 or the like.

The multiplexing unit (MUX) 1412 multiplexes the video stream and the audio stream. The multiplexing may be carried out by any multiplexing method (i.e., the bit stream format generated by multiplexing). Furthermore, at the time of multiplexing, the multiplexing unit (MUX) 1412 can add predetermined header information and the like to the bit stream. That is, the multiplexing unit (MUX) 1412 can convert the format of the stream by multiplexing. For example, the multiplexing unit (MUX) 1412 multiplexes the video stream and the audio stream to convert the video stream and the audio stream into a transport stream which is a bit stream of a transfer format. Furthermore, the multiplexing unit (MUX) 1412 multiplexes, for example, the video stream and the audio stream into data (file data) in a file recording format.

A demultiplexing unit (DMUX) 1413 demultiplexes a bit stream in which a video stream and an audio stream are multiplexed in a method corresponding to multiplexing by a multiplexing unit (MUX) 1412. That is, the demultiplexing unit (DMUX) 1413 extracts the video stream and the audio stream (separates the video stream and the audio stream) from the bit stream read from the stream buffer 1414. That is, the demultiplexing unit (DMUX) 1413 can convert the format of the stream by inverse multiplexing (inverse conversion of the conversion by the multiplexing unit (MUX) 1412). For example, the demultiplexing unit (DMUX) 1413 acquires, for example, a transport stream supplied from the connectivity 1321, the broadband modem 1333, or the like via the stream buffer 1414, and demultiplexes the transport stream to generate a video stream and an audio stream. Furthermore, for example, the demultiplexing unit (DMUX) 1413 obtains, for example, the file data read from various recording media by the connectivity 1321 via the stream buffer 1414, and demultiplexes the file data into the video stream and the audio Stream.

The stream buffer 1414 buffers the bit stream. For example, the stream buffer 1414 buffers the transport stream supplied from the multiplexing unit (MUX) 1412 and supplies the transport stream to the connectivity 1321, the broadband modem 1333, or the like at predetermined timing, or in response to a request from the outside or the like.

Furthermore, for example, the stream buffer 1414 buffers the file data supplied from the multiplexing unit (MUX) 1412, and supplies the file data to, for example, the connectivity 1321 or the like at predetermined timing, in response to an external request, or the like, to record the buffered file data in various recording media.

Furthermore, the stream buffer 1414 buffers the transport stream acquired via, for example, the connectivity 1321, the broadband modem 1333 or the like, and supplies the buffered transport stream to the demultiplexing unit (DMUX) 1413 at predetermined timing, or in response to the external request or the like.

Furthermore, the stream buffer 1414 buffers file data read from various recording media in, for example, the connectivity 1321 and the like, and supplies the buffered file data to the demultiplexing unit (DMUX) 1413 at predetermined timing, or in response to the external request or the like.

Next, an example of the operation of the video processor 1332 having such a configuration is described. For example, the video signal input from the connectivity 1321 or the like to the video processor 1332 is converted into digital image data of a predetermined system such as a 4: 2: 2Y/Cb/Cr system by the video input processing unit 1401 and is written in the frame memory 1405 sequentially. This digital image data is read by the first image scaling unit 1402 or the second image scaling unit 1403, converted into a predetermined system such as a 4: 2: 0Y/Cb/Cr system, subjected to the scaling processing, and is then written in the frame memory 1405 again. This image data is encoded by the encoding/decoding engine 1407 and written in the video ES buffer 1408A as a video stream.

Furthermore, an audio signal input from the connectivity 1321 or the like to the video processor 1332 is encoded by the audio encoder 1410 and written in the audio ES buffer 1409A as an audio stream.

The video stream of the video ES buffer 1408A and the audio stream of the audio ES buffer 1409A are read by the multiplexing unit (MUX) 1412, multiplexed, and converted into a transport stream, file data, or the like. The transport stream generated by the multiplexing unit (MUX) 1412 is buffered in the stream buffer 1414, and then output to the external network via, for example, the connectivity 1321, the broadband modem 1333, or the like. Furthermore, the file data generated by the multiplexing unit (MUX) 1412 is buffered in the stream buffer 1414 and then output to, for example, the connectivity 1321 or the like, and recorded in various recording media.

Furthermore, the transport stream input from the external network to the video processor 1332 via the connectivity 1321, the broadband modem 1333, or the like is buffered in the stream buffer 1414 and then demultiplexed by the demultiplexing unit (DMUX) 1413. Furthermore, the file data read from various recording media in the connectivity 1321 or the like and input to the video processor 1332 is buffered, for example, in the stream buffer 1414 and then demultiplexed by the demultiplexing unit (DMUX) 1413. That is, the transport stream or file data input to the video processor 1332 is separated into a video stream and an audio stream by the demultiplexing unit (DMUX) 1413.

The audio stream is supplied to the audio decoder 1411 via the audio ES buffer 1409B and decoded, and the audio signal is reproduced. Furthermore, after written in the video ES buffer 1408B, the video stream is sequentially read out by the encoding/decoding engine 1407, decoded, and written in the frame memory 1405. The decoded image data is scaling processed by the second image scaling unit 1403 and written in the frame memory 1405. Then, the decoded image data is read by the video output processing unit 1404, subjected to format conversion into a predetermined format, such as the 4: 2: 2Y/Cb/Cr system, and further converted into the analog signal that allows reproduction and output of the video signal.

In a case where the present technology is applied to the video processor 1332 configured as described above, the present technology according to the above-described embodiments may be applied to the encoding/decoding engine 1407. That is, the encoding/decoding engine 1407 may have, for example, the function of the image coding apparatus 100, the function of the image decoding apparatus 200 described above, or both functions. By doing this, the video processor 1332 can obtain the effect similar to the effect obtained in the embodiments described above with reference to Figs. 1 to 12.

Note that, in the encoding/decoding engine 1407, the present technology (i.e., the function of the image coding apparatus 100, the function of the image decoding device 200, or both functions) may be implemented by hardware such as a logic circuit, software such as a built-in program, or both hardware and software.

### (Another Configuration Example of Video Processor)

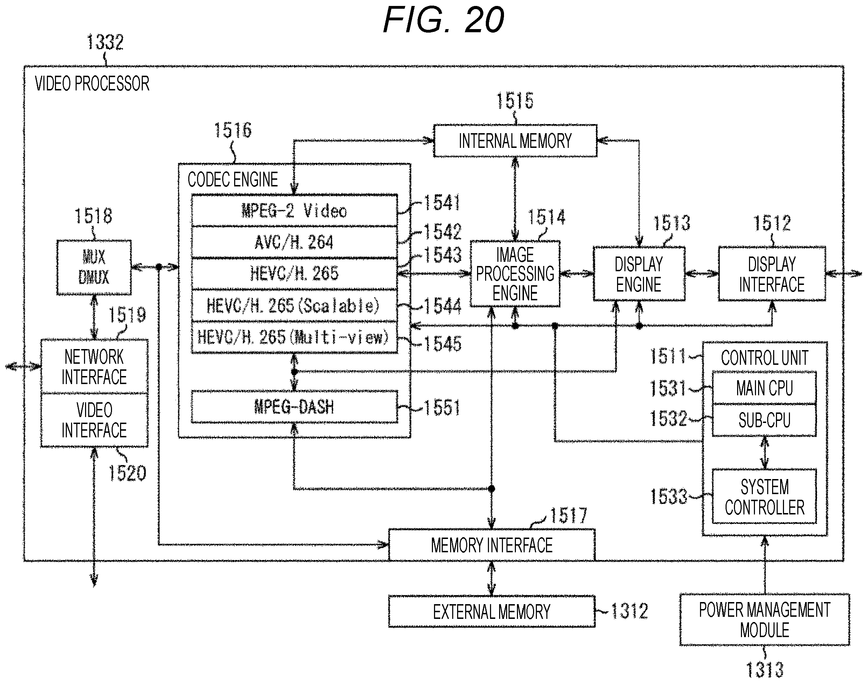

Fig. 20 illustrates a schematic configuration of another example of the video processor 1332 to which the present technology is applied. In the case of the example of Fig. 20, the video processor 1332 has a function of coding and decoding video data in a predetermined format.

More specifically, as illustrated in Fig. 20, the video processor 1332 includes a control unit 1511, a display interface 1512, a display engine 1513, an image processing engine 1514, and an internal memory 1515. Furthermore, the video processor 1332 also includes a codec engine 1516, a memory interface 1517, a multiplexing/demultiplexing unit (MUX DMUX) 1518, a network interface 1519, and a video interface 1520.

The control unit 1511 controls operations of processing units in the video processor 1332, such as the display interface 1512, the display engine 1513, the image processing engine 1514, and the codec engine 1516.

As illustrated in Fig. 20, the control unit 1511 includes, for example, a main CPU 1531, a sub CPU 1532, and a system controller 1533. The main CPU 1531 executes a program or the like for controlling the operations of the processing units in the video processor 1332. The main CPU 1531 generates a control signal according to the program or the like, and supplies the control signal to the processing units (that is, controls the operations of the processing units). The sub CPU 1532 plays an auxiliary role of the main CPU 1531. For example, the sub CPU 1532 executes a child process, a subroutine, or the like of the program or the like executed by the main CPU 1531. The system controller 1533 controls the operations of the main CPU 1531 and the sub CPU 1532, such as specifying programs to be executed by the main CPU 1531 and the sub CPU 1532.

The display interface 1512 outputs the image data, for example, to the connectivity 1321 or the like under the control of the control unit 1511. For example, the display interface 1512 converts the image data of the digital data into an analog signal, and outputs the analog signal to the monitor device or the like of the connectivity 1321 as the reproduced video signal or the image data of the digital data without being converted.

The display engine 1513 performs various conversion processing, such as format conversion, and size conversion, color gamut conversion on the image data under the control of the control unit 1511, so as to allow the image data to conform to the hardware specifications of a monitor device or the like that displays the image.

The image processing engine 1514 performs, for example, predetermined image processing, such as filter processing for improving image quality, on the image data under the control of the control unit 1511.

The internal memory 1515 is a memory provided inside the video processor 1332 and shared by the display engine 1513, the image processing engine 1514, and the codec engine 1516. The internal memory 1515 is used, for example, for exchanging data between the display engine 1513, the image processing engine 1514, and the codec engine 1516. For example, the internal memory 1515 stores data supplied from the display engine 1513, the image processing engine 1514, or the codec engine 1516, and supplies, as necessary (e.g., as requested), the data to the display engine 1513, the image processing engine 1514, or the codec engine 1516. Although this internal memory 1515 may be implemented by any storage device, it is generally used for storing small-capacity data such as image data in blocks and parameters. Preferably, therefore, the internal memory 1515 is implemented by a semiconductor memory, such as a Static Random Access Memory (SRAM),having a relatively small capacity but high response speed (when compared to the external memory 1312, for example).

The codec engine 1516 performs processing related to coding and decoding of image data. The codec engine 1516 may correspond to any encoding/decoding schemes and one or more number of schemes may be used. For example, the codec engine 1516 may have a codec function of a plurality of encoding/decoding schemes, and may select either one of those encoding/decoding schemes to encode image data or decode coded data.

In the example illustrated in Fig. 20, the codec engine 1516 includes, for example, MPEG-2 Video 1541, AVC/H.2641542, HEVC/H.2651543, HEVC/H.265 (Scalable) 1544, HEVC/H.265 (Multi-view) 1545, and MPEG-DASH 1551, as the functional blocks of the processing related to codec.

MPEG-2 Video 1541 is a functional block that encodes and decodes image data according to the MPEG-2 scheme. AVC/H.2641542 is a functional block that encodes and decodes image data according to the AVC scheme. HEVC/H.2651543 is a functional block that encodes and decodes image data according to the HEVC scheme. HEVC/H.265 (Scalable) 1544 is a functional block for scalable coding or scalable decoding of image data according to the HEVC scheme. HEVC/H.265 (Multi-view) 1545 is a functional block that performs multi-viewpoint coding or multi-viewpoint decoding of image data according to the HEVC scheme.

MPEG-DASH 1551 is a functional block that transmits and receives image data according to the MPEG-Dynamic Adaptive Streaming over HTTP (MPEG-DASH) scheme. MPEG-DASH is a technology for streaming video using hypertext transfer protocol (HTTP) having a characteristic in which appropriate coded data is selected and transmitted in segments from a plurality of pieces of coded data each prepared in advance with different resolutions and the like. MPEG-DASH 1551 generates a stream conforming to the standard and transmission control of the stream, for example, and uses MPEG-2 Video 1541 to HEVC/H.265 (Multi-view) 1545 described above for encoding/decoding of the image data.

The memory interface 1517 is an interface for the external memory 1312. Data supplied from the image processing engine 1514 and the codec engine 1516 is supplied to the external memory 1312 via the memory interface 1517. Furthermore, the data read from the external memory 1312 is supplied to the video processor 1332 (the image processing engine 1514 or the codec engine 1516) via the memory interface 1517.

A multiplexing/demultiplexing unit (MUX DMUX) 1518 multiplexes and demultiplexes various kinds of data related to an image, such as a bit stream of coded data, image data, and a video signal. Any method may be used for the multiplexing/demultiplexing. For example, at the time of multiplexing, the multiplexing/demultiplexing unit (MUX DMUX) 1518 is not only able to assemble the plurality of pieces of data into one, but also add predetermined header information or the like to the data. Furthermore, at the time of demultiplexing, the multiplexing/demultiplexing unit (MUX DMUX) 1518 not only divides one data into a plurality of pieces of data, but also adds predetermined header information or the like to each piece of divided data. That is, the multiplexing/demultiplexing unit (MUX DMUX) 1518 can convert the format of data by multiplexing/demultiplexing. For example, the multiplexing/demultiplexing unit (MUX DMUX) 1518 multiplexes bit streams to therefore convert streams which is bit streams in a transfer format or data (file data) in a recording file format. Of course, reverse conversion is also possible by demultiplexing.

The network interface 1519 is an interface directed to, for example, the broadband modem 1333, the connectivity 1321, and the like. The video interface 1520 is an interface for, for example, the connectivity 1321, the camera 1322, and the like.

Next, an example of the operation of such a video processor 1332 is described. For example, when a transport stream is received from the external network via the connectivity 1321, the broadband modem 1333, or the like, the transport stream is supplied to the multiplexing/demultiplexing unit (MUX DMUX) 1518 via the network interface 1519 and demultiplexed, and decoded by the codec engine 1516. The image data obtained by decoding by the codec engine 1516 is subjected to, for example, predetermined image processing by the image processing engine 1514, predetermined conversion by the display engine 1513, and supplied to, for example, the connectivity 1321 or the like via the display interface 1512 to display the image on the monitor. Furthermore, the image data obtained by decoding by the codec engine 1516 is re-encoded, for example, by the codec engine 1516, multiplexed by the multiplexing/demultiplexing unit (MUX DMUX) 1518, converted to file data, output to, for example, the connectivity 1321 and the like via the video interface 1520, and recorded in various recording media.

Furthermore, the file data of the coded data obtained by coding the image data, read out from the recording medium (not illustrated) by the connectivity 1321 or the like, is supplied, for example, to the multiplexing/demultiplexing unit (MUX DMUX) 1518 via the video interface 1520, demultiplexed, and decoded by the codec engine 1516. The image data obtained by decoding by the codec engine 1516 is subjected to predetermined image processing by the image processing engine 1514, predetermined conversion by the display engine 1513, and supplied to, for example, the connectivity 1321 or the like via the display interface 1512 to display the image on the monitor. Furthermore, the image data obtained by decoding by the codec engine 1516 is re-encoded, for example, by the codec engine 1516, multiplexed by the multiplexing/demultiplexing unit (MUX DMUX) 1518, converted into a transport stream, supplied to, for example, the connectivity 1321, the broadband modem 1333, and the like via the network interface 1519, and transmitted to other devices (not illustrated).

Note that image data and other data are exchanged between the processing units in the video processor 1332 using, for example, the internal memory 1515 and the external memory 1312. Furthermore, the power management module 1313 controls, for example, power supply to the control unit 1511.

In a case where the present technology is applied to the video processor 1332 configured in this way, the present technology according to the above-described embodiments may be applied to the codec engine 1516. That is, the codec engine 1516, for example, may have the function of the image coding apparatus 100, the function of the image decoding apparatus 200, or both functions. By doing this, the video processor 1332 can obtain the effect similar to the effect obtained in the embodiments described above with reference to Figs. 1 to 12.

Note that, in the codec engine 1516, the present technology (i.e., function of the image coding apparatus 100) may be implemented by hardware such as a logic circuit, software such as a built-in program, or both hardware and software.

Although two example configurations of the video processor 1332 have been described above, the configuration of the video processor 1332 is not limited to this and other configurations other than the above two configurations may also be possible. Furthermore, the video processor 1332 may be configured as one semiconductor chip, but may also be configured as a plurality of semiconductor chips. For example, the video processor 1332 may be configured as a three-dimensional laminated LSI in which a plurality of semiconductors are stacked may be used. Furthermore, a plurality of LSIs may be used for implementation.

### (Application Example to Device)

The video set 1300 can be incorporated into various devices that process image data. For example, the video set 1300 can be incorporated in the television device 900 (Fig. 14), the mobile phone 920 (Fig. 15), the recording/reproducing device 940 (Fig. 16), the imaging device 960 (Fig. 17), or the like. By incorporating the video set 1300, the device can obtain the effect similar to the effect of the embodiments described above with reference to Figs. 1 to 12.

Note that, even a part of each configuration of the video set 1300 described above can be implemented as a configuration to which the present technology is applied as long as it includes the video processor 1332. For example, only the video processor 1332 can be implemented as a video processor to which the present technology is applied. Furthermore, for example, as described above, the processor indicated by the dotted line 1341, the video module 1311, and the like can be implemented as a processor, a module, or the like to which the present technology is applied. Furthermore, for example, the video module 1311, the external memory 1312, the power management module 1313, and the front end module 1314 may be combined and implemented as the video unit 1361 to which the present technology is applied. In any of the configurations, it is possible to obtain the effect similar to the effect of the embodiments described above with reference to Figs. 1 to 12.

That is, regardless of the configuration as long as it includes the video processor 1332, it can be incorporated into various apparatuses that process image data, as in the case of the video set 1300. For example, the video processor 1332, the processor indicated by the dotted line 1341, the video module 1311, or the video unit 1361 may be incorporated in the television device 900 (Fig. 14), the mobile phone 920 (Fig. 15), the recording/reproducing device 940 (Fig. 16), the imaging device 960 (Fig. 17), or the like. Then, by incorporating any of the configurations to which the present technology is applied, the device obtains the effect similar to the effect of the embodiments described above with reference to Figs. 1 to 12, as in the case of the video set 1300.

### <Ninth Embodiment>

Furthermore, the present technology can also be applied to a network system constituted by a plurality of devices. Fig. 21 illustrates a schematic configuration of an example of a network system to which the present technology is applied.

A network system 1600 illustrated in Fig. 21 is a system in which devices exchange information about the image (moving image) via network. A cloud service 1601 of the network system 1600 is a system that provides services related to image (moving image) to terminals such as a computer 1611, an audio visual (AV) device 1612, a portable digital assistant 1613, and an Internet of Things (IoT) device 1614, which are connected to the cloud service 1601 communicably. For example, the cloud service 1601 provides a terminal with a content supply service of images (moving images), such as so-called movie distribution (on-demand or live distribution). Furthermore, the cloud service 1601 provides, for example, a backup service for receiving and storing content of images (moving images) from a terminal. Furthermore, the cloud service 1601 provides, for example, a service for mediating the transfer of content of images (moving images) between terminals.

The physical configuration of the cloud service 1601 is arbitrary. For example, the cloud service 1601 may include a network, such as various types of servers, such as a server that stores and manages moving images, a server that distributes moving images to terminals, a server that acquires moving images from terminals, a server that manages users (terminals) and billing, an arbitrary network such as the Internet or LAN.

The computer 1611 is configured by, for example, an information processing apparatus such as a personal computer, a server, or a workstation. The AV device 1612 is constituted by an image processing apparatus such as a television receiver, a hard disk recorder, a game device, or a camera. The portable digital assistant 1613 includes a portable information processing device such as a notebook personal computer, a tablet terminal, a mobile phone, and a smartphone. The IoT device 1614 includes an arbitrary object that performs processing related to images, such as machines, home appliances, furniture, other objects, IC tags, and card type devices. Each terminal has a communication function to connect to the cloud service 1601 (establish a session), and exchanges (i.e., communicates) information with the cloud service 1601. Furthermore, each terminal can also communicate with other terminals. Communication between the terminals may be performed via the cloud service 1601 or may be performed without going through the cloud service 1601.

In a case where the present technology is applied to the network system 1600 as described above to exchange data of the image (moving image) between terminals or between terminals and the cloud service 1601, the image data may be coded/decoded as described in the above embodiments. That is, the terminals (the computer 1611 to the IoT device 1614) and the cloud service 1601 may each have the function of the above-described image coding apparatus 100 or the image decoding apparatus 200. By doing this, the terminals (the computer 1611 to the IoT device 1614) exchanging the image data and the cloud service 1601 can obtain the effect similar to the effect of the embodiments described above with reference to Figs. 1 to 12.

Note that various information relating to the coded data (bit stream) may be multiplexed into the coded data and transmitted or recorded, or may be transmitted or recorded as separate data associated with the coded data without being multiplexed to the coded data. As used herein, the term "associate" means, for example, to make one data be available (linkable) in processing the other data. That is, the data associated with each other may be collected as one data or may be individual data. For example, the information associated with coded data (image) may be transmitted on a transmission path different from the transmission path of the coded data (image). Furthermore, the information associated with coded data (image) may be recorded, for example, in a recording medium (or a separate recording area of the same recording medium) different from the coded data (image). Note that the "association" may be performed for a part of data instead of the entire data. For example, an image and information corresponding to the image may be associated with each other in arbitrary units such as a plurality of frames, one frame, or a part within a frame.

Furthermore, the effect recited in the present specification is given only as an example effect and not in a limiting manner, and an additional effect may also be provided.

Furthermore, embodiments of the present disclosure are not limited to the above-mentioned embodiments, and various changes may be made without departing from the spirit of the present disclosure.

For example, the present disclosure may be configured as a cloud computing configuration in which a single function is shared among a plurality of devices via a functional network and processed cooperatively.

Furthermore, the steps described in the above-mentioned flowchart can be executed by a single apparatus or can be executed by a plurality of apparatuses in a distributed manner.

Furthermore, in a case where a single step includes a plurality of processing steps, the plurality of processing steps included in the single step can be executed by a single apparatus or can be executed by a plurality of apparatuses in a distributed manner.

The present disclosure may have following configurations.

(1) An image processing apparatus, including:
   a selection unit that selects a reference line, which is referenced during intra prediction of a current block, and an intra prediction mode from a first intra prediction mode and a second intra prediction mode,
   the first intra prediction mode being an intra prediction mode in referencing a first line closest to the current block, with a group of pixels having the same distance to the current block as a line, and the second intra prediction mode being an intra prediction mode in referencing a second line other than the first line; and
   a prediction unit that performs the intra prediction on the current block on the basis of the reference line and the intra prediction mode which are selected by the selection unit, in which the second intra prediction mode is a part of the first intra prediction mode.
(2) The image processing apparatus according to (1) above, in which
   the second intra prediction mode includes an intra prediction mode indicating a horizontal direction, a vertical direction, and a diagonal direction as reference directions.
(3) The image processing apparatus according to (2) above, in which
   the second intra prediction mode is configured by selecting the first intra prediction mode at every predetermined number.
(4) The image processing apparatus according to (1) above, in which
   the second intra prediction mode is an intra prediction mode of a block around the current block.
(5) The image processing apparatus according to any one of (1) to (4) above, further including
   a setting unit that sets intra prediction mode information indicating the intra prediction mode selected by the selection unit, in which
   the setting unit is configured to set reference line information indicating the reference line selected by the selection unit, in a case where the intra prediction mode selected by the selection unit is an intra prediction mode common to the first intra prediction mode and the second intra prediction mode.
(6) The image processing apparatus according to any one of (1) to (4) above, in which
   the selection unit selects the intra prediction mode on the basis of the intra prediction mode information indicating the intra prediction mode.
(7) The image processing apparatus according to (6) above, in which
   the selection unit selects the reference line on the basis of the reference line information indicating the reference line, in a case where the intra prediction mode indicated by the intra prediction mode information is an intra prediction mode common to the first intra prediction mode and the second intra prediction mode, and
   the selection unit selects the first line as the reference line, in a case where the intra prediction mode indicated by the intra prediction mode information is not an intra prediction mode common to the first intra prediction mode and the second intra prediction mode.
(8) An image processing method causing an image processing apparatus to perform:
   a selection step of selecting a reference line, which is referenced during intra prediction of a current block, and an intra prediction mode from a first intra prediction mode and a second intra prediction mode,
   the first intra prediction mode being an intra prediction mode in referencing a first line closest to the current block, with a group of pixels having the same distance to the current block as a line, and the second intra prediction mode being an intra prediction mode in referencing a second line other than the first line; and
   a prediction step of performing intra prediction on the current block on the basis of the reference line and the intra prediction mode which are selected by the processing of the selecting step, in which
   the second intra prediction mode is a part of the first intra prediction mode.
(9) An image processing apparatus, including
   a prediction unit that performs the intra prediction on the current block on the basis of extension information indicating whether the extension is an extension in a reference direction indicated by the intra prediction mode or, with a group of pixels having the same distance to the current block as a line, an extension of the reference line which is a line to be referenced in the intra prediction of the current block.
(10) The image processing apparatus according to (9) above, further including
   a selection unit that selects a reference line and an intra prediction mode from a first number of intra prediction modes in referencing each of the plurality of lines in a case where the extension information indicates extension of the reference line, in which
   the prediction unit is configured to perform the intra prediction on the current block on the basis of the reference line and the intra prediction mode selected by the selection unit.
(11) The image processing apparatus according to (10) above, further including
   a setting unit configured to set information indicating the reference line and the intra prediction mode which are selected by the selection unit.
(12) The image processing apparatus according to (10) above, in which
   in a case where the extension information indicates the extension in the reference direction, the selection unit selects the intra prediction mode from a second number of intra prediction modes of a nearest line closest to the current block, the second number being larger than the first number, and selects the nearest line as the reference line, and
   the second number of intra prediction modes includes the first number of intra prediction modes.
(13) The image processing apparatus according to (12) above, in which
   a total number of intra prediction modes of the first number of the plurality of lines is to or smaller than the second number.
(14) The image processing apparatus according to (13) above, further including
   a setting unit that allocates information unique to each line and each intra prediction mode and sets the information of the reference line and the intra prediction mode selected by the selection unit.
(15) The image processing apparatus according to any one of (9), (10), (12), and (13) above, further including
   a setting unit that sets the extension information.
(16) An image processing method causing an image processing apparatus to perform
   an intra prediction step of performing intra prediction on a current block on the basis of extension information indicating whether an extension of the intra prediction is an extension in a reference direction indicated by an intra prediction mode, or an extension of a reference line which is referenced in the intra prediction of the current block, with a group of pixels having the same distance to the current block as a line.

### REFERENCE SIGNS LIST

- 100: Image coding apparatus
- 101A: Selector
- 101B: Setting unit
- 119: Prediction unit
- 130: Current block
- 140 to 143: Line
- 200: Image decoding apparatus
- 211: Selector

## Claims

1. An image processing apparatus, comprising:
a selection unit that selects a reference line, which is referenced during intra prediction of a current block, and an intra prediction mode from a first intra prediction mode and a second intra prediction mode;
the first intra prediction mode being an intra prediction mode in referencing a first line closest to the current block, with a group of pixels having the same distance to the current block as a line, and the second intra prediction mode being an intra prediction mode in referencing a second line other than the first line; and
a prediction unit that performs the intra prediction on the current block on a basis of the reference line and the intra prediction mode which are selected by the selection unit, wherein
the second intra prediction mode is a part of the first intra prediction mode.

2. The image processing apparatus according to claim 1, wherein
the second intra prediction mode includes an intra prediction mode indicating a horizontal direction, a vertical direction, and an diagonal direction as reference directions.

3. The image processing apparatus according to claim 2, wherein
the second intra prediction mode is configured by selecting the first intra prediction mode at every predetermined number.

4. The image processing apparatus according to claim 1, wherein
the second intra prediction mode is an intra prediction mode of a block around the current block.

5. The image processing apparatus according to claim 1, further comprising:
a setting unit that sets intra prediction mode information indicating the intra prediction mode selected by the selection unit, wherein
the setting unit is configured to set reference line information indicating the reference line selected by the selection unit, in a case where the intra prediction mode selected by the selection unit is an intra prediction mode common to the first intra prediction mode and the second intra prediction mode.

6. The image processing apparatus according to claim 1, wherein
the selection unit selects the intra prediction mode on a basis of the intra prediction mode information indicating the intra prediction mode.

7. The image processing apparatus according to claim 6, wherein
the selection unit selects the reference line on a basis of the reference line information indicating the reference line, in a case where the intra prediction mode indicated by the intra prediction mode information is an intra prediction mode common to the first intra prediction mode and the second intra prediction mode, and
the selection unit selects the first line as the reference line, in a case where the intra prediction mode indicated by the intra prediction mode information is not an intra prediction mode common to the first intra prediction mode and the second intra prediction mode.

8. An image processing method causing an image processing apparatus to perform:
a selection step of selecting a reference line, which is referenced during intra prediction of a current block, and an intra prediction mode from a first intra prediction mode and a second intra prediction mode;
the first intra prediction mode being an intra prediction mode in referencing a first line closest to the current block, with a group of pixels having the same distance to the current block as a line, and the second intra prediction mode being an intra prediction mode in referencing a second line other than the first line; and
a prediction step of performing the intra prediction on the current block on a basis of the reference line and the intra prediction mode which are selected by the processing of the selecting step, wherein
the second intra prediction mode is a part of the first intra prediction mode.

9. An image processing apparatus, comprising:
a prediction unit that performs intra prediction on a current block on a basis of extension information indicating whether the extension is an extension in a reference direction indicated by the intra prediction mode or, with a group of pixels having the same distance to the current block as a line, an extension of the reference line which is a line to be referenced in the intra prediction of the current block.

10. The image processing apparatus according to claim 9, further comprising
a selection unit that selects a reference line and an intra prediction mode from a first number of intra prediction modes in referencing each of the plurality of lines in a case where the extension information indicates extension of the reference line, wherein
the prediction unit is configured to perform the intra prediction on the current block on a basis of the reference line and the intra prediction mode selected by the selection unit.

11. The image processing apparatus according to claim 10, further comprising
a setting unit configured to set information indicating the reference line and the intra prediction mode which are selected by the selection unit.

12. The image processing apparatus according to claim 10, wherein
in a case where the extension information indicates the extension in the reference direction, the selection unit selects the intra prediction mode from a second number of intra prediction modes of a nearest line closest to the current block, the second number being larger than the first number, and selects the nearest line as the reference line, and
the second number of intra prediction modes includes the first number of intra prediction modes.

13. The image processing apparatus according to claim 12, wherein
a total number of intra prediction modes of the first number of the plurality of lines is to or smaller than the second number.

14. The image processing apparatus according to claim 13, further comprising
a setting unit that allocates information unique to each line and each intra prediction mode and sets the information of the reference line and the intra prediction mode selected by the selection unit.

15. The image processing apparatus according to claim 9, further comprising
a setting unit that sets the extension information.

16. An image processing method causing an image processing apparatus to perform:
an intra prediction step of performing intra prediction on a current block on a basis of extension information indicating whether an extension of the intra prediction is an extension in a reference direction indicated by an intra prediction mode, or an extension of a reference line which is referenced in the intra prediction of the current block, with a group of pixels having the same distance to the current block as a line.
